(19) Europäisches Patentamt
European Patent Office
Office européen des brevets

(11) EP 0 635 660 B1

(12) **EUROPÄISCHE PATENTSCHRIFT**

(45) Veröffentlichungstag und Bekanntmachung des Hinweises auf die Patenterteilung:
**24.09.1997 Patentblatt 1997/39**

(51) Int Cl.[6]: **F16H 61/06**

(21) Anmeldenummer: **94110398.8**

(22) Anmeldetag: **04.07.1994**

(54) **Steuersystem und Verfahren zur Steuerung eines Fahrzeuglastschaltgetriebes**

System and method for controlling a vehicle power-shift transmission

Système et méthode pour la commande d'une transmission à changement sous puissance pour véhicule

(84) Benannte Vertragsstaaten:
**AT BE DE FR GB IT**

(30) Priorität: **20.07.1993 US 95434**

(43) Veröffentlichungstag der Anmeldung:
**25.01.1995 Patentblatt 1995/04**

(73) Patentinhaber: **DEERE & COMPANY**
**Moline, Illinois 61265 (US)**

(72) Erfinder:
- **Brandon, David Eugene**
  **Waterloo, Iowa 50702-2841 (US)**
- **Falck, Peter Leslie**
  **Waterloo, Iowa 50702 (US)**
- **Jeffries, Dennis Lee**
  **Waterloo, Iowa 50701 (US)**

(74) Vertreter: **Feldmann, Bernhard et al**
**DEERE & COMPANY**
**European Office**
**Patent Department**
**Steubenstrasse 36-42**
**68163 Mannheim (DE)**

(56) Entgegenhaltungen:
**EP-A- 0 435 374**  **US-A- 4 653 350**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf ein Steuersystem und ein Steuerverfahren für ein Fahrzeuggetriebe, insbesondere auf ein mikroprozessorunterstütztes elektronisch gesteuertes Steuersystem für ein Lastschaltgetriebe, welches durch Hydraulikdruck betätigbare Getriebesteuerelemente, wie Kupplungen und Bremsen, sowie Magnetventile enthält, durch die der an die Getriebesteuerelemente gelieferte Hydraulikdruck gesteuert wird. Insbesondere bezieht sich die Erfindung auf ein Steuersystem sowie ein Verfahren zur Steuerung der elektrischen Signale, die an die Magnetventile angelegt werden.

Die EP-A-0 435 374 beschreibt ein Verfahren zur Steuerung des Gangwechsels für Automatikgetriebe, wie sie vor allem bei Personenkraftwagen Anwendung finden. Zum Gangwechsel werden Kupplungen hydraulisch angesteuert. Mit einem Gangwechselbefehl wird für eine anfängliche Füllzeit ein maximaler Fülldruck an eine Kupplung, die eingerückt werden soll, angelegt. Nach der Füllzeit wird der Steuerdruck auf einen Anfangswert abgesenkt und dann langsam gesteigert. Sobald ein Drehzahlabfall der Antriebsmaschine festgestellt wird, geht die Steuerung in einen geschlossenen Kreis über. Hierbei wird der Steuerdruck so eingestellt, daß die Kupplung entsprechend eines vorgebbaren Schlupfprofils angelegt wird. Bei Erreichen der Synchrondrehzahl, wird der Steuerdruck auf Maximum gesetzt, um die Kupplung vollständig einzurücken.

Durch einige Hersteller wurden Ausführungsarten von elektrohydraulischen Getriebesteuerungen mit einigem Erfolg verwendet. Beispielsweise wurde durch Ford New Holland, Ltd. ein Lastschaltgetriebe vertrieben, welches zwei Regelventile enthält, die drei unterschiedliche Steuerkupplungen des Getriebes steuern. Diese Regelventile werden ihrerseits durch eine elektronische Steuerschaltung gesteuert. Eine derartige proportionale Steuerung erlaubt es, daß ein Kupplungselement während des Einrückens und Lösens moduliert wird, und die Steuerschaltung ermöglicht die Modulation eines bestimmten Elements für jeden einzelnen Gangwechsel. In der US-A-4,855,913 ist ein anderes System beschrieben, welches Ein-Aus-Ventile und wenigstens ein proportionales Steuerventil enthält.

Bei diesen Systemen kann jede Kupplung ein unterschiedliches Füllvolumen aufweisen, was unterschiedliche Füllzeiten erfordert. Die US-A-5,082,097 bezieht sich auf eine Steuerung für ein Getriebe, welches eine Kupplung enthält, die durch ein Magnetventil angesteuert wird. Ferner ist ein Kalibriersystem oder ein System zur Feststellung eines Stromsignals beschrieben, das dem Wert entspricht, bei dem die Kupplung beginnt Drehmomente zu übertragen. Die EP-A-0 578 223 offenbart Verfahren zur Bestimmung eines Fülldruckkalibrierwertes und eines Füllvolumenkalibrierwertes.

Es ist wünschenswert die zeitliche Abstimmung des späteren Unterdrucksetzens einer derartigen Kupplung (nachdem sie gefüllt wurde), mit Bezug auf das Ende der Zeitperiode, die für das Füllen der Kupplung erforderlich ist, zu steuern. Wenn dies geschieht und wenn die Füllzeit so eingestellt ist, daß sie verschiedene Zustände kompensiert, dann wird auch die zeitliche Abstimmung der späteren Unterdrucksetzung der Kupplung so angepaßt, daß die verschiedene Zustände kompensiert werden. Es ist auch wünschenswert, daß zu einem Zeitpunkt, der kurz vor dem Zeitpunkt liegt, zu dem die Drehmomentübertragung von einem Element auf ein anderes Element am Ende eines Gangwechsels umgeschaltet ist, alle Elemente mit der gleichen Zeitbasis gesteuert werden, so daß solche Drehmomentumschaltungen zeitlich genau aufeinander abstimmbar sind.

Die der Erfindung zugrunde liegende Aufgabe wird darin gesehen, ein Steuersystem sowie ein Verfahren zur Steuerung eines Lastschaltgetriebes anzugeben, bei dem die zeitliche Abstimmung der Unterdrucksetzung eines zuvor gefüllten Elementes (Kupplung, Bremse) als Funktion des Zeitintervalls gesteuert wird, das zum Füllen des Elementes erforderlich war. Ferner soll ein Verfahren angegeben werden, bei dem zu einem Zeitpunkt, unmittelbar bevor die Drehmomentenübertragung von einem Element auf ein anderes umgeschaltet ist, alle Elemente mit der gleichen Zeitbasis gesteuert werden, so daß derartige Drehmomentenverlagerungen relativ zueinander zeitlich genau einstellbar sind.

Die Aufgabe wird erfindungsgemäß durch die Lehren der Patentansprüche 1 und 6 gelöst. Weitere vorteilhafte Ausgestaltungen und Weiterbildungen der Erfindung gehen aus den Unteransprüchen hervor.

Das erfindungsgemäße Steuersystem enthält insbesondere einen Mikroprozessor, der periodisch einen Algorithmus ausführt und der einen Speicher aufweist, in dem ein sequentieller Satz von Zeitreferenzwerten und ein sequentieller Satz von Druckführungswerten gespeichert ist. Das Steuersystem legt an jedes wirksam werdende Element während Fülldauern, die für die Steuerelemente charakteristisch sind, einen Fülldruckimpuls an. Das Steuersystem bestimmt nach dem Füllen der Steuerelemente Umschaltzeitwerte, die als Funktion der Fülldauer gebildet werden. Das Steuersystem legt Drucksignale an die Steuerelemente zu Zeiten an, die durch die Umschaltzeitwerte repräsentiert und für jedes Element charakteristisch sind. Das Steuersystem bestimmt im Anschluß an eine Gleichlaufstartzeit Gleichlaufumschaltzeitwerte, die für alle Steuerelemente gleich sind. Das Steuersystem legt ferner im Anschluß an die Gleichlaufstartzeit Drucksignale an die Steuerelemente zu Zeiten an, die als Funktion der Gleichlaufumschaltzeitwerte bestimmt sind.

Insbesondere umfaßt das erfindungsgemäße Verfahren das Speichern eines sequenziellen Satzes von Zeitreferenzwerten und sequenzieller Sätze von Druckführungs- oder -sollwerten und Drucksteigerungsraten in einem Speicher sowie das periodische Ausführen eines Algorithmus. Jeder Druckführungswert und jede Drucksteigerungsrate entspricht einem der Zeitreferenzwerte. Mit jedem Durchlauf des Algorithmus wird ein Absolutzeitwert schrittweise erhöht. Bevor ein Fülldruckimpuls an das Steuerelement angelegt wird, wird ein Umschaltzeitwert mit dem Absolutzeitwert gleich gesetzt. Als Antwort auf einen Aufweckbefehl wird ein Ölstrom für eine vorbestimmbare Zeitdauer an die Kupplung geliefert, um das Element zu füllen. Während dieser Füllperiode wird ein Basisimpulszeitwert periodisch schrittweise erhöht, der Absolutzeitwert periodisch schrittweise erhöht und eine Erhöhung des Umschaltzeitwertes verhindert. Wenn der Basisimpulszeitwert gleich einem vorgebbaren Aufweckzeitwert (der besagt, daß die Kupplung gefüllt ist) ist, wird ein Aufweck-Flag gesetzt, der Absolutzeitwert erhöht und der Umschaltzeitwert gleich dem Absolutzeitwert zuzüglich eines Maximumzeitwertes und abzüglich eines Fülldauerzeitwertes gesetzt. Nachdem das Aufweck-Flag gesetzt und das Steuerelement gefüllt ist, wird der Absolutzeitwert erhöht und mit einem Gleichlaufstartzeitwert verglichen. Wenn der Absolutzeitwert kleiner als der Gleichlaufstartzeitwert ist, wird der Umschaltzeitwert gleich gesetzt mit dem Absolutzeitwert zuzüglich des Maximumzeitwertes und abzüglich des dauerzeitwertes. Wenn der Absolutzeitwert nicht kleiner als der Gleichlaufstartzeitwert ist, wird der Umschaltzeitwert gleich gesetzt mit dem Absolutzeitwert zuzüglich des Maximumzeitwertes. Nach jeder Festsetzung des Umschaltzeitwertes wird dieser mit einem der gespeicherten Zeitreferenzwerte verglichen, und es wird aus den gespeicherten Druckbefehlswerten und Steigerungsraten des Speichers ein zugehöriger Wert ausgewählt und ein entsprechendes Drucksignal an das Steuerelement angelegt. Wenn der Umschaltzeitwert nicht kleiner ist als der Zeitreferenzwert, wird der Zeitreferenzwert auf den nächsten sequenziellen Zeitreferenzwert aktualisiert. Nach einer Gleichlaufstartzeit werden alle Elemente in Abhängigkeit eines identischen Zeitwertes gesteuert, der auf dem Absolutzeitwert basiert.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1 das Blockdiagramm eines mikroprozessorunterstützten Getriebesteuersystems, bei dem die vorliegende Erfindung anwendbar ist,

Fig. 2a die Schnittdarstellung eines Getriebes, bei dem die vorliegende Erfindung anwendbar ist,

Fig. 2b einen vergrößerten Ausschnitt des in Fig. 2 dargestellten Getriebes,

Fig. 3 das vereinfachte Flußdiagramm eines Algorithmus gemäß dem erfindungsgemäßen Verfahren, der feststellt, ob ein Gangwechsel forderlich ist,

Fig. 4 das vereinfachte Flußdiagramm eines schleifenalgorithmus, gemäß dem erfindungsgemäßen Verfahrens,

Fig. 5 das vereinfachte Flußdiagramm eines lisierungsalgorithmus, der durch das schleifenalgorithmus der vorliegenden Erfindung ausgeführt wird,

Fig. 6a und 6b das vereinfachte Flußdiagramm eines funktionsalgorithmus, durch den aus dem Druckwert Peol, der durch den in Fig. 7 dargestellten Algorithmus bereitgestellt wird, der Druckwert Press(el) eines Elementes bestimmbar ist,

Fig. 7 das vereinfachte Flußdiagramm eines Algorithmus, der aus den gespeicherten Druckwerten PE (i), die in einem Speicher abgelegt sind, den Druckwert Peol ermittelt,

Fig. 8a und 8b das vereinfachte Flußdiagramm eines Umwandlungsfunktionsalgorithmus, durch den aus den Druckwerten Press(el), die durch den in Fig. 6a und 6b dargestellten Algorithmus gewonnen wurden, eine Einschaltdauer für ein Ventilführungssignal bestimmt wird,

Fig. 9 das vereinfachte Flußdiagramm eines funktionsalgorithmus, der die Zeiten festlegt, zu der verschiedene Drücke an die Steuerventile 22 angelegt werden,

Fig. 10 ein Signal-Zeit-Diagramm, welches illustriert, wie sich für eine Umschaltung, deren Daten der Umschalttabelle entnehmbar sind, der Einschaltdauerwert eines schaltzyklusses in Abhängigkeit der Zeit dert, und

Fig. 11 ein Druck-Zeit-Diagramm, welches illustriert, wie sich für eine Umschaltung, deren Daten der Schalttabelle entnehmbar sind, der an die Getriebekupplungselemente angelegte Druck in Abhängigkeit der Zeit ändert.

Wie Fig. 1 zeigt, enthält ein Fahrzeugantriebsstrang einen Motor 10, welcher ein Lastschaltgetriebe 12 antreibt, welches seinerseits eine Ausgangswelle 13 aufweist, die über eine konventionelle Trennkupplung (Schleppmomenttrennmechanismus) 14 eine mit den nicht gezeigten Fahrzeugrädern verbundene Ausgangswelle 16 antreibt. Das Lastschaltgetriebe 12 enthält ein Getriebe 18, welches durch einen Satz druckbetätigbarer Steuerelemente oder Kupplungen 20 einstellbar ist, die ihrerseits durch einen zugehörigen Satz von elektromagnetisch betätigbaren Proportionalsteuerventilen 22 ansteuerbar sind. Bei dem Getriebe 18 kann es sich um ein solches handeln, wie es durch die US-A-5,011,465 beschrieben wurde.

Das Steuersystem des Lastschaltgetriebes 12 enthält eine Getriebesteuereinheit 30, einen Bordcomputer 32 und eine Armaturenbrettanzeige 34. Bei der Getriebesteuereinheit 30 und dem computer 32 handelt es sich vorzugsweise um mikroprozessorunterstützte elektronische Steuereinheiten. Eine manuelle Einstellung läßt sich durch einen Getriebeschalthebel 36 vornehmen. Eine Getriebesteuerschalter- und Dekodiereinheit 38 liefert Signale, die der Lage des Getriebeschalthebels 36 entsprechen, an die Getriebesteuereinheit 30. Ein Einkuppelschalter 40 und ein Auskuppelschalter 42 liefern Signale, die der Lage des Kupplungspedals 44 entsprechen. Der Bordcomputer 32 empfängt Signale von einem Motordrehzahlsensor 46, einem Fahrzeuggeschwindigkeitssensor 48 und einem Getriebeöltemperatursensor 50. Der Bordcomputer 32 sendet Informationen von diesen Sensoren an die Getriebesteuereinheit 30.

Die Getriebesteuereinheit 30 enthält einen handelsüblichen, nicht näher dargestellten Mikroprozessor, der ein Computerprogramm ausführt, durch welches das im folgenden beschriebene Kupplungssteuerverfahren umgesetzt wird. Die Getriebesteuereinheit 30 enthält ferner nicht gezeigte Ventiltreiber, welche an die Steuerventileinheiten 22 pulsweitenmodulierte Spannungssignale mit variablen Pulspausenverhältnissen abgeben. Die Getriebesteuereinheit 30 und die nicht dargestellten Ventiltreiber 24 erzeugen in Abhängigkeit verschiedener erfaßter und eingestellter Eingangsgrößen Steuersignale, durch die ein gewünschter Druck, der von den Einschaltdauern der Spannungssignale abhängt, in den Kupplungen aufgebaut wird. Dadurch wird die Umschaltung des Lastschaltgetriebes 12 in gewünschter Weise gesteuert.

Gemäß der Fig. 2a und 2b enthalten die Steuerelemente des Lastschaltgetriebes 12 einen Satz von Bremselementen B1, B2, B3, B4 und B5 und einen Satz von Kupplungselementen C1, C2, C3 und CLO. Die Eingangswelle 52 ist über eine Keilverzahnung 54 mit der Kupplungstrommel 56 der Kupplungen C1 und C2 (C2 ist in Fig. 2b nicht gezeigt) verbunden. Die Kupplungstrommel 56 ist ihrerseits über Verzahnungen mit den Kupplungstrennscheiben 58 der Kupplung C1 verbunden. Die Kupplungsscheiben 60 der Kupplung C1 sind über Keilverzahnungen mit der Kupplungsnabe 62 der Kupplung C1 verbunden. Die Kupplungsnabe 62 ist mit einer ersten Zwischenwelle 64 verzahnt. Die erste Kupplung C1 enthält zu ihrer Betätigung einen Kolben 66, durch den die Kupplungstrennscheiben 58 und die Kupplungsscheiben 60 zusammenpreßbar sind. Eine Feder 68 spannt die Kupplung C1 in ihre nicht eingerückte Stellung vor. Weitere Informationen hinsichtlich der Details eines derartigen Getriebes können der US-A-5,011,465 entnommen werden.

Eines der Steuerventile 22, das der Kupplung C1 zugeordnet ist, ist schematisch in Fig. 2b dargestellt. Das Steuerventil 22 ist an eine Pumpe 70 und einen Vorratsbehälter 72 oder Sumpf angeschlossen und steuert das Unterdrucksetzen des Kolbens 66 in Abhängigkeit von Signalen, die von der Getriebesteuereinheit 30 empfangen werden. Jedes der Brems- und Kupplungselemente wird durch ein entsprechendes Steuerventil gesteuert. Jedes der Steuerventile 22 ist vorzugsweise ein zweistufiges elektrohydraulisches Ventil, beispielsweise vom Typ mit der Modelnummer 151140 der Firma FEMA Corp. USA. Solch ein Ventil hat eine Hauptstufe, wie sie durch die US-A-4,741,364 beschrieben wurde.

Die nachfolgende Beschreibung bedient sich einer Reihe von Symbolen und Initialworten, die wie folgt definiert sind:

CLDspd ist ein Drehzahlansprechwert, der verwendet wird, wenn durch das Kupplungspedal die Trennkupplung 24 vollständig geöffnet ist, um festzustellen, ob eine Umschaltung unter direktem Eingriff oder bei ausgerückter Trennkupplung 24 und rollendem Fahrzeug auftreten soll.

Ne ist die Motordrehzahl.

Nemax ist die maximale Maschinendrehzahl, die in der Umwandlungsgleichung verwendet werden kann.

Nemin ist die minimale Maschinendrehzahl, die in der Umwandlungsgleichung verwendet werden kann.

P(f) ist der Druckwert einer Umschalttabelle, welcher verwendet wird, um zu signalisieren, daß zusätzliche Elementfüllung oder maximaler Druck gefordert wird.

P(w) ist der Druckwert einer Umschalttabelle, der einem Basisaufweckimpuls für ein Element entspricht.

Pcd ist der maximale Druckführungswert, der während einer Umschaltung verwendet wird, die bei ausgerückter Trennkupplung 24 und rollendem Fahrzeug erfolgt.

Pch ist der Druckführungswert, der für eine Zentrifugaldruckeinstellung verwendet wird.

PE(i) ist der Druckwert eines bestimmten Umschalttabelleneintrags.

Peol ist der Druckwert, der unter Verwendung der Eintragungen für den Druck, die Steigerungsrate und die Zeit aus der Umschalttabelle ermittelbar ist.

Pfill ist der spezielle Wert von Peol, der während einer Elementenfüllung verwendet wird (dieser Wert ist größer als Pmax).

Pfill(el) ist der Fülldruck eines Elements, der durch das Kalibrierverfahren ermittelt wurde.

Pmax ist der Wert von Peol, der dem höchsten normalen Druckführungswert entspricht.

Poffset ist ein Skalierwert, welcher es zuläßt, daß Press(el) kleiner als Pfill(el) ist.

Press(el) ist der Druckführungswert für ein Element, der durch das Druckfunktionsunterprogramm bestimmt wird.

Pwake ist der spezielle Wert von Peol, der während eines Basisaufweckimpulses für ein Element verwendet wird.

SE(i) ist die Steigerungsrate eines bestimmten Umschalttabelleneintrags.

t(abs) ist der Zeitgeberwert, der die absolute Zeit während einer Umschaltung angibt.

t(bp) ist der Zeitgeberwert, der die Zeitdauer angibt, während der ein Basisaufweckimpuls vorgerückt wurde.

t(fc) ist die Zeitanpassung, die für die Füllkompensation verwendet wird.

t(sft) ist der Zeitgeberwert, der zunächst ermittelt wird, um dann aus der Umschalttabelle geeignete Druckwerte zugewinnen.

tE(i) ist der Zeitwert, der einem spezifischen Satz von Umschalttabellendaten entspricht.

To ist die Getriebeöltemperatur.

Tomax ist die maximale Öltemperatur, die in der Umwandlungsgleichung verwendbar ist.

Tomin ist die minimale Öltemperatur, die in der Umwandlungsgleichung verwendbar ist.

tr ist der "Gleichlaufstartzeitpunkt", bzw. der Zeitwert, bei dem eine Umschaltung von relativer Zeit, bei der jedes Element individuell gesteuert wird, auf absolute Zeit, bei der die Elemente synchron angesteuert werden, erfolgt.

twake(el) ist die Zeitdauer des Basisaufweckimpulses für ein Element, die durch das Kalibrierverfahren ermittelt wird.

twake(max) ist eine willkürliche Zeitdauer, die verwendet wird, um zu verhindern, daß während der Kalibrierung negative Zahlenwerte auftreten.

t1a (oder t1b) ist eine Pausenzeit zwischen Getriebeumschaltungen.

Vbat ist die Eingangsspannung der Steuerschaltung.

Vmax ist die maximale Spannung, die in der Umwandlungsgleichung verwendbar ist.

<u>Vmin</u> ist die minimale Spannung, die in der Umwandlungsgleichung verwendbar ist.

Im folgenden wird auf die Fig. 3 bis 9 Bezug genommen. Die dort dargestellten Algorithmen und Unterprogramme werden ständig für jedes der acht Ventile alle 20 Millisekunden einmal auf gleiche Weise ausgeführt.

Fig. 3 zeigt ein Testprogramm 100, welches ausgeführt wird, um festzustellen, ob eine Umschaltung des Getriebes 12 erforderlich ist. Dieses Programm ist Teil eines Gesamtprogramms, das während eines normalen Betriebs ständig wiederholend ausgeführt wird.

Schritt 102 testet, ob der geforderte Gang (der durch die Lage des Getriebeschalthebels 36 eingestellt ist) der gleiche ist, wie der aktuell wirksame Gang. Ist dies nicht der Fall, so prüft Schritt 104, ob eine Umschaltung eingeleitet wurde. Falls auch dies nicht zutrifft, prüft Schritt 106, ob eine Pausenzeit t1a oder t1b seit der letzten Umschaltung abgelaufen ist. t1a und t1b sind Pausenzeiten zwischen Umschaltungen, durch die sich der zeitliche Ablauf der Umschaltungen koordinieren läßt. Es wurde gefunden, daß es zu einem Problem führen kann, wenn die Umschaltungen zu schnell aufeinander folgen. Daher wird eine Pausenzeit zwischen Umschaltungen verwendet. Die Pausenzeit muß abgelaufen sein, ehe eine weitere Umschaltung ausgeführt werden kann. Zu diesem Zweck wird nach jeder abgeschlossenen Umschaltung ein Zeitgeber in Gang gesetzt. Es gibt zwei verschiedene Pausenzeiten, die davon abhängen, ob sich der Schlepper in einem Arbeitsgang oder in einem Transportgang befindet. In Abhängigkeit von Schlepperanforderungen können zusätzliche Pausenzeiten festgelegt werden.

Eine Abfrage in Schritt 108 dient der Lageüberprüfung des Kupplungspedals 44. Ist durch das Kupplungspedal 44 die Trennkupplung 14 nicht vollständig ausgerückt, so hat eine Umschaltfolge begonnen. Wenn die Trennkupplung 14 vollständig ausgerückt ist, wird die Raddrehzahl des Fahrzeuges in Schritt 110 mit dem Wert CLDspd verglichen. Ist die Raddrehzahl größer als CLDspd, so wurde eine Gangumschaltsequenz eingeleitet. Ist die Raddrehzahl nicht größer als CLDspd, werden die Kupplungselemente, die dem eingestellten Gang entsprechen, unmittelbar ohne eine Modulation eingestellt. Dies dient der Vermeidung von Verzögerungen beim Umschalten, während das Fahrzeug sich nicht oder nur sehr langsam bewegt (beispielsweise beim Stehen an einem Haltesignal). Auch wenn die vorliegende Erfindung sich nicht vorwiegend auf dieses Testprogramm bezieht, wird es beschrieben, um zu zeigen, welche Vorbereitungen für den Beginn einer Umschaltung getroffen werden.

Fig. 4 zeigt die Hauptumschaltsteuerschleife 200 bzw. das Hauptverfahren, welches während einer Getriebegangumschaltung für jedes Element ausgeführt wird. Zunächst wird eine "Initialisierungs"-Funktion 300 für jedes Element am Beginn jeder Umschaltung ausgeführt. Bei 400 wird eine "Druck"-Funktion ausgeführt, um den Druckführungswert zu bestimmen, der den Druck repräsentiert, welcher an die einzelnen Kupplungen anzulegen ist. Es folgt eine "Umwandlungs"-Funktion 500, die die elektrische Einschaltdauer der pulsweiten modulierten Spannungssignale bestimmt, welche bei Anlegung an das entsprechende Ventil den durch die "Druck"-Funktion bestimmten Druck erzeugt. Als nächstes bestimmt oder steuert die "Zeit"-Funktion 600 die Inkremente von Zeitgebern, um den zeitlichen Ablauf von Vorgängen während des Gangwechsels zu steuern. Wurde ein "Umschaltung"-Flag gesetzt, das anzeigt, daß die Umschaltung abgeschlossen ist, so leitet Schritt 202 das Ende der Hauptumschaltsteuerschleife 200 ein. Andernfalls wird durch Schritt 204 das Ende der gerade durchgeführten Einschaltperiode des Ventilsteuersignals abgewartet und durch Schritt 206 wird zu geeigneter Zeit eine neue Einschaltdauer für eines der Ventile in Gang gesetzt.

Die "Initialisierungs"-Funktion 300 ist genauer in Fig. 5 dargestellt. Grundsätzlich werden in den Schritten 302 - 314 alle Zähler, Flags und Zeitgeberwerte für einen Gangwechsel initialisiert. In den Schritten 306 bis 310 werden die Motordrehzahlwerte Ne und die Öltemperaturwerte To eingelesen. Diese Werte werden mit einer Öltemperatur/Motordrehzahl-Kompensationstabelle, die nicht näher dargestellt wurde und in einem Speicher abgelegt ist, verwendet, um die t(fc)-Werte zu bestimmen. Der t(fc)-Wert repräsentiert die Anzahl der 20-Millisekunden-Schritte durch die ein Absolutzeitgeber erhöht wird. Die Schritte 306 - 312 können als "Füllimpuls"-Kompensation beschrieben werden, bei der die Fülldauer jedes Kupplungselements eingestellt wird, um Veränderungen in der Motordrehzahl und der Öltemperatur zu kompensieren. Dies wird in dem Zeitgeberdiagramm der Fig. 10 durch die Zeitdauer veranschaulicht, die zwischen 0 und 100 Millisekunden durch t(fc) markiert ist. Bei einem normalen Gangwechsel werden die wirksam werdenden Elemente, die nach der Gangumschaltung der Kraftübertragung dienen, durch einen Füllimpuls von variabler Dauer gesteuert bzw. unter Druck gesetzt, der sicher stellt, daß das zu füllende Element vollständig gefüllt wird. Der Beginn einer Umschaltung kann im beschriebenen Beispiel um bis zu fünf (100 msec) Zeitintervalle vorverlegt werden und ist abhängig von dem Ölfluß (Motordrehzahl) und der Ölviskosität (Öltemperatur). Hierdurch läßt sich während der wichtigen Füllperiode beim Beginn eines Gangwechsels die zeitliche Abstimmung der wirksam werdenden Elemente einstellen und eine langsamere Ventilreaktion aufgrund kalten Öls sowie aufgrund langsamerer Füllung durch geringere Pumpenleistung kompensieren. Für wirkungslos werdende Elemente, die vor dem Gangwechsel der Kraftübertragung dienten, und für wirksam werdende Elemente erfolgt eine Anpassung durch den gleichen Zeitbetrag, doch übt dies keinen Gesamteffekt auf sie aus.

Durch die in den Fig. 6a und 6b dargestellte "Druck"-Funktionsroutine 400 wird ein Druckführungswert Press(el) bestimmt, der später bei der "Umwandlungs"-Funktion 500 verwendet wird. Die "Druck"-Funktion setzt in Schritt 402 den Wert Press(el) gleich einem Wert Pfill(el), der durch ein Kalibrierverfahren, wie es beispielsweise durch die US-A-5,224,577 beschrieben wurde, ermittelt wurde. In Schritt 404 wird dann ein Offsetwert "Poffset" derart von dem Wert Press(el) subtrahiert, daß keine negativen Werte bearbeitet werden müssen.

Als nächstes wird ein "Peol"-Unterprogramm ausgeführt, welches später anhand der Fig. 7 beschrieben wird. Durch dieses Programm werden Druck- und Steigerungswerte aus in einer Umschalttabelle gespeicherten Daten gewonnen und zur Berechnung eines Druckwertes Peol herangezogen. Der Algorithmus kehrt dann zu der Druckfunktion der Fig. 6a zurück, wo in den Schritten 406 und 408 der Wert Press(el) gleich Null gesetzt wird, wenn Peol gleich Null ist. Die Schritte 410 und 412 setzen zu Zeiten, in denen (für die Füllkompensation) zusätzliches Öl für das wirksam werdende Element gebraucht bzw. in denen maximaler Druck gewünscht wird, und daher der Wert Peol gleich dem Umschalttabellenwert P(f) ist, den Wert Press(el) auf einen maximalen Druckführungswert Pfill. Wenn der Wert Peol gleich dem Umschalttabellenwert P(w) ist, setzen die Schritte 414 und 416 den Wert Press(el) auf den Wert Pwake. Pwake ist ein spezieller Wert, der auch verwendet wird, um den Beginn eines "Aufweck"-Impulses (wakeup-pulse) zu signalisieren, der die anfängliche Unterdrucksetzungsperiode (Hauptfüllphase) des wirksam werdenden Elements darstellt. Er ist ein Indikator, welcher durch die Zeitfunktion der Fig. 9 verwendet wird, um die Erhöhung eines Basisimpulszeitgeberwertes t(bp) einzuleiten.

Fällt Peol nicht unter einen dieser drei speziellen Fälle, dann addiert Schritt 418 den Wert Peol zu dem Wert Press (el). In Schritt 420 wird dann festgestellt, ob für das Element eine Zentrifugaldruckkompensation erfordert. Ist dies der Fall, so wird in den Schritten 422 - 426 die Motordrehzahl eingelesen, der geeignete Druckwert Pch aus einer gespeicherten Tabelle bestimmt und zu dem Druckwert Pch der Wert Press(el) addiert. Auf diese Weise addieren die Schritte 420 - 426 zu dem Wert Press(el) einen Zentrifugaldruckkompensationswert. Das Zentrifugaldruckkompensationsverfahren wurde im einzelnen in der oben genannte US-A-5,224,577 beschrieben.

Durch die Schritte 428 und 430 wird der Wert Press(el) auf einen maximalen Druckwert Pmax begrenzt, um Überschreitungen bei späteren Berechnungen zu vermeiden. Pmax ist ein maximaler Ventileinschaltdauerwert, der jedoch kleiner ist als Pfill und Pwake, so daß die Steuerschaltung zwischen diesen Werten in einer späteren Berechnung unterscheiden kann. Als nächstes wird durch Schritt 432 das Unterprogramm beendet, sofern die Kupplung eingerückt ist. Andernfalls schreitet dieses Unterprogramm zu den Schritten 434 und 436 weiter, durch die der Wert Press(el) auf einen Druckwert Pcd begrenzt wird, sofern bei sich bewegendem Schlepper die Trennkupplung 14 ausgerückt ist. Dies erlaubt es dem Kupplungselement zu schleifen und den Eingriffsstoß zu verringern. Der Eingriffsstoß ist auf die Massenträgheit des Getriebes 18 zurückzuführen, welche auf die nicht dargestellten Hinterräder übertragen wird, da im vorliegenden Antriebsstrang die Kupplungen im vorderen Teil des Getriebes 18, nahe dem Motor angeordnet sind. Es ist zu beachten, daß die Werte P(f) und P(w) hiervon nicht beeinflußt werden, so daß das wirksam werdende Element gleichwohl korrekt gefüllt wird. Auf diese Weise bestimmt die "Druck"-Funktion 400 den Druckführungswert Press(el).

In den Fig. 8a und 8b ist die "Umwandlungs"-Funktion 500 dargestellt. Der Ausgangsdruck des elektrohydraulischen Ventils 22 kann als lineare Funktion elektrischer Pulspausenverhältnisse, durch die die Einschaltdauern der Arbeitszyklen definiert sind, beschrieben werden. Idealer Weise kann diese Funktion durch eine lineare Gleichung der Form Y = mX + b beschrieben werden, wobei Y ein Ventilführungsswert, X = Press(el), m ein Steigerungsterm und b ein Offsetterm ist. Die "Umwandlungs"-Funktion 500 beginnt mit dem Schritt 502, durch welchen der in der Druck-Routine ermittelte Wert Press(el) eingelesen wird. Wenn Press(el) gleich Null ist, setzen die Schritte 504 - 508 den Einschaltdauerwert auf Null und legen diesen Einschaltdauerwert an den nicht gezeigten Ventiltreiber des entsprechenden Ventils 22 an. Ist Press(el) größer oder gleich Pmax, so setzen die Schritte 510 - 514 den Einschaltdauerwert auf 95% und legen diesen Einschaltdauerwert an den nicht gezeigten Ventiltreiber des entsprechenden Ventils 22 an. Hierdurch wird der Ventiltreiber voll eingeschaltet und veranlaßt das Ventil, den maximal möglichen Druck bereitzustellen.

Ist Press(el) nicht größer oder gleich Pmax, so überprüfen die Schritte 516 - 524 einen Batteriespannungswert Vbat der Steuerschaltung und begrenzen Vbat zwischen einem minimalen und einem maximalen Wert. Durch die Schritte 526 - 534 wird der Motordrehzahlwert Ne überprüft und zwischen einem minimalen und einem maximalen Wert limitiert. Durch die Schritte 536 - 544 wird der Öltemperaturwert To überprüft und zwischen einem minimalen und einem maximalen Wert limitiert.

In Schritt 546 wird dann der Wert der Einschaltdauer Valve Cmd(%), d. h. das Pulspausenverhältnis des Ansteuersignals der Ventiltreiber, gemäß folgender Gleichung (Umwandlungsgleichung) berechnet:

$$\text{Valve Cmd}(\%) = [\text{Int} + K_1(\text{Vbat}) + K_2(\text{Ne}) + K_3(\text{To}] + [\text{Slope} + K_4(\text{Vbat}) + K_5(\text{Ne}) + K_6(\text{To})][\text{Press(el)}]$$

Dabei sind Int das Intercept (Y-Achsenabschnitt) einer unkorrigierten Umwandlungsfunktion, Slope die Steigung einer unkorrigierten Umwandlungsfunktion und $K_1$ - $K_6$ empirisch bestimmte Konstanten. Das Ergebnis des Schrittes 546 ist ein Ventilführungswert, der hinsichtlich Änderungen der Batteriespannung, der Motordrehzahl und der Öltemperatur eingestellt bzw. kompensiert ist. Durch Schritt 548 wird dieser Führungswert an den zugehörigen Ventiltreiber angelegt.

Auch wenn obige Gleichung hinsichtlich eines gegebenen Satzes von Eingangsbedingungen linear ist, so kann die Praxis viele weitere Variationen liefern. Es wurde jedoch experimentell festgestellt, daß für die im vorliegenden System verwendeten Ventile die einzigen beiden bedeutsamen Faktoren Änderungen der Eingangsspannung der Steuerschaltung sowie des Eingangsdrucks des Ventils sind. Während die Ventilspannung unmittelbar gemessen werden kann, werden Änderungen des Eingangsdruckes durch die Überwachung der Öltemperatur und der Motordrehzahl bestimmt. (Sofern ein zuverlässiger, preiswerter Druckumsetzer verfügbar ist, kann der Druck auch unmittelbar gemessen werden.)

Um zu vermeiden, daß aus Meßwerten, die durch ein schadhaftes Instrument geliefert werden, ungeeignete Ergebnisse resultieren, werden maximale und minimale Werte für jede Eingangsgroße festgesetzt. Sofern irgend welche anderen Eingangsgrößen, auf die das Ventil anspricht, vorliegen, können entsprechende zusätzliche Faktoren in obige Gleichung aufgenommen werden.

Die folgenden Beschreibungen der Figuren 7 und 9 lassen sich am besten unter Zuhilfenahme nachfolgender Umschalttabelle verstehen. Die Tabelle stellt ein Beispiel für die Daten dar, die in einem Speicher abgespeichert sind und die im Zusammenhang mit einer Umschaltung durch den Algorithmus verarbeitet werden. In der vorliegenden Umschalttabelle ist das Element A ein wirksam werdendes Element und Element B ein wirkungslos werdendes Element. Es versteht sich, daß für andere Umschaltungen andere Umschalttabellen verwendet werden können. Die Steigerungsrate SE(i) ist durch die Druckänderung pro Zeitintervall ausgedrückt. Der Druck PE(i) ist der dem Fülldruck entsprechende Druck, der zu dem jeweiligen Zeitpunkt gefordert wird, zuzüglich eines Offsetdrucks Poffset.

Umschalttabelle

| i | Element A | | | Element B | | |
|---|---|---|---|---|---|---|
| | tE(i) (msec) | SE(i) (kP/20ms) | PE(i) (kP) | tE(i) (msec) | SE(i) (kP/20ms) | PE(i) (kP) |
| 1 | 0 | 0 | 1593 | 0 | -30 | 1100 |
| 2 | 100 | 0 | 1680 | 400 | 0 | 500 |
| 3 | 600 | 0 | 0 | 500 | 0 | 0 |
| 4 | 620 | 0 | 160 | | | |
| 5 | 920 | 0 | 160 | | | |
| 6 | 940 | 0 | 600 | | | |
| 7 | 1040 | 0 | 600 | | | |
| 8 | 1300 | 0 | 1593 | | | |

Das in Fig. 7 dargestellte "Peol"-Unterprogramm 700 entnimmt aus der Umschalttabelle die geeigneten Druckwerte PE(i) und Steigerungswerte SE(i) und berechnet den Wert von Peol, welcher der Druckfunktion 400 der Fig. 6a und 6b zur Verfügung gestellt wird. Zunächst wird in Schritt 702 ein Index auf 1 gesetzt. Dann vergleicht Schritt 704 einen Umschaltzeitwert t(sft) (der durch die weiter unten anhand Fig. 9 beschriebene Zeitfunktion geliefert wird) mit dem nächsten gespeicherten Zeitgeberwert tE(i+1). Ist t(sft) kleiner als tE(i+1), dann werden in den Schritten 708 - 712 die Werte von PE(i) und SE(i) aus der Umschalttabelle eingelesen und der Wert Peol gemäß der Gleichung berechnet:

$$Peol = PE(i) + SE(i) \times [t(sft) - tE(i)]$$

Ist tE(i) nicht der letzte Wert in der Tabelle, so wird in den Schritten 714 und 718 ein "Umschaltung"-Flag, das anzeigt, daß die Umschaltung abgeschlossen ist, gelöscht und die Steuerung zu Schritt 406 der Druckfunktion gemäß Fig. 6a zurückgeführt. Wenn tE(i) der letzte Wert in der Tabelle ist, setzen die Schritte 714 und 716 ein "Umschaltung"-Flag und lenken die Steuerung zurück zu der Druckfunktion der Fig. 6a. Ist also t(sft) kleiner als tE(i+1), so liest das "Peol"-Unterprogramm die Druck- und Steigungswerte, die dem tE(i) entsprechen, aus der Umschalttabelle ein. Ist jedoch t(sft) nicht kleiner als tE(i+1), so lenkt Schritt 704 das Unterprogramm auf Schritt 706, durch den der Index i um 1 erhöht. Daraufhin erfolgt eine Rückkehr zu Schritt 704. Durch die Schritte 704 - 712 werden dann die Druck- und Steigungswerte aus der nächsten Reihe der Umschalttabelle aufgerufen.

Im folgenden wird die "Zeit"-Funktion 600, die in Fig. 9 dargestellt ist, erläutert. Die Zeitfunktion 600 erzeugt die schaltzeitwerte t(sft), die in dem "Peol"-Unterprogramm verwendet werden, um Daten aus der Umschalttabelle zu substituieren. Wenn keine Umschaltung angefordert wird und das Aufweckimpuls-Flag nicht gesetzt wurde, erhöhen die Schritte 602, 616, 624 und 626 lediglich den Absolutzeitwert t(abs) um 1, setzen einen Umschaltzeitwert t(sft) gleich t(abs) und führen diesen t(sft)-Wert für eine Verwendung bei der nächsten Durchführung des "Peol"-Unterprogramms zurück.

Wenn in Schritt 602 festgestellt wird, daß der Wert Press(el) gleich einem speziellen, für einen Aufweckdruckimpuls kennzeichnenden Wert Pwake ist, schreitet der Algorithmus zu Schritt 604 fort, durch den ein Basisimpulszeitwert t (bp) um 1 erhöht wird. Dann wird in Schritt 606 der Wert t(bp) mit dem Wert twake(el) verglichen, welcher der Zeit entspricht, zu der der Aufweckimpuls beendet werden soll. Vor dieser Zeit ist t(bp) nicht gleich twake(el) und der Schritt 606 richtet die Steuerung auf Schritt 608, durch welchen der Absolutzeitwert t(abs) um 1 erhöht wird. Der Umschaltzeitwert t(sft) bleibt unverändert, und dieser unveränderte Wert t(sft) wird für eine Verwendung bei der nächsten Durchführung des "Peol"-Unterprogramms zurückgeführt. Der Algorithmus setzt die Schleife durch die Schritte 602 - 608 bis zu der Zeit fort, zu der der Aufweckimpuls abgelaufen ist.

Zu der Zeit, zu der der Aufweckimpuls abgelaufen ist, ist t(bp) gleich twake(el), und Schritt 606 richtet die Steuerung auf Schritt 610, durch welchen ein Aufweckimpuls-Flag gesetzt wird. Der Schritt 612 erhöht dann den Absolutzeitwert t(abs) um 1, und Schritt 614 berechnet den Umschaltzeitwert t(sft) gemäß der Gleichung:

$$t(sft) = t(abs) + twake(max) - twake(el)$$

Dabei ist twake(max) eine weitere willkürliche Zahl, die hinzuaddiert wird, so daß alle Zahlen positiv bleiben, und twake(el) ist die Dauer des Aufweckimpulses für ein bestimmtes der acht einrückbaren Umschaltelemente.

Wenn der Aufweckimpuls abgelaufen ist, bleibt Press(el) nicht länger gleich Pwake. Daher richtet bei der nächsten Ausführung der "Zeit"-Funktion der Schritt 602 die Steuerung auf Schritt 616, und, da das Aufweckimpuls-Flag gesetzt wurde, richtet 616 die Steuerung auf Schritt 618. Schritt 618 erhöht den Zeitgeberwert t(abs) um 1. Schritt 620 vergleicht t(abs) mit einem "Gleichlaufstartzeit"-Wert tr. Wenn t(abs) kleiner als der "Gleichlaufstartzeit"-Wert tr ist, setzt Schritt 622 den Wert t(sft) gleich[t(abs) + twake(max) - twake(el)] und führt diesen t(sft)-Wert für eine Verwendung bei der nächsten Durchführung des "Peol"-Unterprogramms zurück. Damit ist in dem Zeitintervall zwischen dem Ende des Aufweckimpulses und einer "Gleichlaufstartzeit" der Umschaltzeitwert t(sft) eine Funktion von dem Wert twake(el), der für jedes einzelne gesteuerte Element bzw. Kupplung unterschiedlich sein kann.

Wenn die "Gleichlaufstartzeit" tr erreicht ist, beispielsweise bei t(abs) gleich 420 Millisekunden, richtet Schritt 620 die Steuerung anschließend auf Schritt 628. Schritt 628 setzt t(sft) gleich [t(abs) + twake(max)] und führt diesen t(sft)-Wert für eine Verwendung bei der nächsten Durchführung des "Peol"-Unterprogramms zurück. Damit ist nach der "Gleichlaufstartzeit" der Umschaltzeitwert t(sft) unabhängig von dem Wert twake(el) und ist gleich für jedes Element. Es wird betont, daß t(sft) jetzt gleich ist für alle wirksam und wirkungslos werdenden Elemente, auch wenn für das wirksam werdende Element t(abs) + twake(max) und für das wirkungslos werdende Element nur t(abs) gilt. Dies ist so, weil die Zeitwerte in der Umschalttabelle entsprechend angepaßt sind. Hieraus folgt, daß nach der "Gleichlaufstartzeit" die zeitlichen Einstellungen aller Elemente eine Funktion eines identischen Umschaltzeitwertes t(sft) sind. Dies erlaubt eine präzise zeitliche Abstimmung jedes der wirksam werdenden Elemente relativ zu den anderen Elementen bevor die Umschaltung den kritischen Punkt erreicht, bei dem ein Element ausgeschaltet wird und kein Drehmoment mehr überträgt, und ein anderes Element eingeschaltet wird und mit der Drehmomentübertragung beginnt (Elementen-Swapping).

Zusammenfassend sei betont, daß der Absolutzeitwert t(abs) mit jedem Durchlauf des Algorithmus erhöht wird. Bevor der Fülldruckimpuls an das Steuerelement angelegt wird, wird ein Umschaltzeitwert t(sft) dem Absolutzeitwert t(abs) gleich gesetzt.

In Reaktion auf einen Aufweckbefehl wird Druck für eine vorbestimmte Dauer, die durch twake(el) repräsentiert wird, an die Kupplung angelegt, um das Element zu füllen. Während dieser Füllperiode werden ein Basisimpulszeitwert t(bp) und der Absolutzeitwert t(abs) periodisch erhöht. Jedoch wird während dieser Füllperiode der Umschaltzeitwert t(sft) nicht erhöht.

Wenn der Basisimpulszeitwert t(bp) gleich einem vorherbestimmten Aufweckzeitwert twake(el) (der besagt, daß die Kupplung gefüllt ist) ist, wird ein Aufweck-Flag gesetzt, der Absolutzeitwert t(abs) erhöht und der Umschaltzeitwert t(sft) gleich dem Absolutzeitwert t(abs) zuzüglich eines maximalen Zeitwertes twake(max) und abzüglich eines Fülldauerzeitwertes twake(el) gesetzt. Nachdem das Steuerelement gefüllt und das Aufweck-Flag gesetzt wurde, wird der Absolutzeitwert t(abs) erhöht und mit einer Gleichlaufstartzeitwert tr verglichen. Ist der Absolutzeitwert t(abs) kleiner als der Gleichlaufstartzeitwert tr, wird der Umschaltzeitwert t(sft) weiterhin gleich dem Absolutzeitwert t(abs) zuzüglich des maximalen Zeitwerts twake(max) und abzüglich des Fülldauerzeitwerts twake(el) gesetzt.

Ein Schlüsselaspekt der vorliegenden Erfindung ist es, daß, da die twake(el)-Werte für jedes Element unterschiedlich sein können, nach dem Füllen eines Elements und vor der Gleichlaufstartzeit tr die Umschaltzeiten t(sft), die sich aus dem Schritt 622 ergeben, für jedes wirksam werdende Element unterschiedlich sein können. Hieraus folgt, daß die zeitliche Abstimmung der drucksetzungsereignisse während dieser Periode für jedes unterschiedliche Element bzw. jede Kupplung oder Bremse des Getriebes 18 einzigartig und individuell und eine Funktion des twake(el)-Wertes für dieses besondere Element ist.

Ist in Schritt 620 der Absolutzeitwert t(abs) nicht kleiner als der Gleichlaufstartzeitwert tr, bedeutet dies, daß die Gleichlaufstartzeit tr erreicht wurde. Der Umschaltzeitwert t(sft) wird dann gleich dem Absolutzeitwert t(abs) zuzüglich eines maximalen Zeitwertes twake(max) gesetzt. Hieraus folgt, daß nachdem die Gleichlaufstartzeit tr erreicht wurde, die drucksetzungsereignisse für alle Elemente durch den selben, identischen Zeitwert, nämlich [t(abs) + twake(max)] angesteuert werden. Dies erlaubt eine genaue Synchronisation der Drucksteuerung nach Erreichen der Gleichlaufstartzeit tr.

Nach jeder Bestimmung des Umschaltzeitwertes t(sft) wird dieser mit einem der gespeicherten Zeitreferenzwerte tE(i) verglichen, ein geeigneter der gespeicherten Druckführungswerte PE(i) und Steigungswerte SE(i) wird aus dem Speicher ausgewählt und ein Drucksignal Peol, Press(el) wird für die Steuerelemente bereitgestellt. Ist der Umschaltzeitwert t(sft) nicht kleiner als der Zeitreferenzwert, wird der Zeitreferenzwert tE(i) auf den nächsten sequenziellen Zeitreferenzwert tE(i+1) aktualisiert. Nach Erreichen einer Gleichlaufstartzeit tr werden alle Elemente als Funktion eines identischen Zeitwertes t(sft), der auf den Absolutzeitwert zurückgeht, gesteuert.

In den Fig. 10 und 11 sind Signale über die Zeit aufgetragen. Sie zeigen, wie sich für eine Umschaltung, die unter den Daten der Umschalttabelle erfolgt, die Einschaltdauer und der Elementendruck als Funktion der Zeit ändern. Der Einschaltdauerwert und der Druck für ein wirksam werdendes Element bzw. eine Kupplung oder Bremse (Element A) sind durch durchgezogenen Linien dargestellt. Der Einschaltdauerwert und Druck für ein wirkungslos werdendes Element bzw. eine Kupplung oder Bremse (Element B) sind durch gestrichelte Linien dargestellt. Der schraffierte Bereich zwischen t(abs) = 0 und 100 Millisekunden entspricht dem variablen Bereich der Füllzeit, der durch den Füllkompensationswert t(fc) definiert und aus der Initialisierungsfunktion 300 der Fig. 5 abgeleitet ist. Die verbleibende Dauer der Füllzeit (die bis 240 Millisekunden läuft) hängt von dem twake(el)-Kalibrierwert ab, welcher für jedes Element spezifisch ist. Die Dauer des 0%-Einschaltdauerwertes, der bei t(abs) = 240 Millisekunden beginnt, sowie die zeitliche Abstimmung des Unterdrucksetzens des Elements A bei t(abs) = 260 Millisekunden ist eine Funktion von twake(el) und daher für jedes Element individuell. Nach der Gleichlaufstartzeit tr bei t(abs) = 420 Millisekunden wird die zeitliche Abstimmung beider Elemente A und B als Funktion identischer Zeitwerte, die auf t(abs) basieren, gesteuert. Dies erlaubt während der Zeitspanne von t(abs) = ungefähr 450 Millisekunden bis zur Beendigung der Umschaltung zur Zeit t(abs) = ungefähr 800 Millisekunden eine genaue, relative zeitliche Abstimmung des Übergangs der Drehmomentübertragung von Element B auf Element A.

## Patentansprüche

1. Steuersystem für ein Fahrzeuglastschaltgetriebe mit mehreren hydraulisch betätigbaren Steuerelementen, durch das zur Umschaltung des Getriebes der an die Elemente gelieferte Hydraulikdruck gesteuert wird, mit Mitteln, zum Anlegen eines Fülldruckimpulses an jedes wirksam werdende Element während Füllperioden (twake(el)), die für jedes Element individuell sind, gekennzeichnet durch

   - Mittel zur Bestimmung von Umschaltzeitwerten (t(sft)) im Anschluß an das Füllen der Steuerelemente als Funktion der Füllperiode (twake(el)),
   - Mittel zur Anlegung von Drucksignalen an die Steuerelemente zu Zeiten, die durch die Umschaltzeitwerte (t(sft)) repräsentiert werden, wobei die Umschaltzeitwerte (t(sft)) für jedes Steuerelement individuell sind,
   - Mittel, durch die nach einem Gleichlaufstartzeitpunkt (tr) Gleichlaufzeitwerte bestimmt werden, welche für alle Steuerelemente gleich sind, und
   - Mittel, durch die nach dem Gleichlaufstartzeitpunkt (tr) Drucksignalen an die Steuerelemente zu Zeiten angelegt werden, die als Funktion der Gleichlaufzeitwerte bestimmt sind.

2. Steuersystem nach Anspruch 1, gekennzeichnet durch

   - einen Speicher zum Speichern eines sequenziellen Satzes von Zeitreferenzwerten (tE(i)) und eines sequenziellen Satzes von Druckführungswerten (PE(i)), wobei jeder Druckführungswert (PE(i)) einem der Zeitreferenzwerten (tE(i)) zugeordnet ist,
   - Mittel zum Vergleichen der Umschaltzeitwerte (t(sft)) mit einem der gespeicherten Zeitreferenzwerte (tE(i+1)) und zum Auswählen eines der gespeicherten Druckführungswerte (PE(i)) in Abhängigkeit des Vergleichsergebnisses und
   - Mittel zum Anlegen von Drucksignalen, die von den ausgewählten Druckführungswerten (PE(i)) abhängen, an die Steuerelemente.

3. Steuersystem nach Anspruch 2, dadurch gekennzeichnet, daß ein mikroprozessorunterstütztes System vorgesehen ist zur Steuerung der Druckbeaufschlagung der Steuerelemente, durch das zur Umschaltung des Getriebes der an die Elemente gelieferte Hydraulikdruck gesteuert wird, mit

- Mitteln, durch die vor dem Anlegen eines Fülldruckimpulses an ein Steuerelement periodisch ein Absolutzeitwert (t(abs)) erhöht und ein Umschaltzeitwert (t(sft)) mit dem Absolutzeitwert (t(abs)) gleich gesetzt wird,

- Mitteln, durch die in Abhängigkeit eines Aufweckbefehls ein Basisimpulszeitwert (t(bp)) und ein Absolutzeitwert (t(abs)) periodisch erhöht werden und die Erhöhung des Umschaltzeitwertes (t(sft)) verhindert wird,

- Mitteln durch die dann, wenn der Basisimpulszeitwert (t(bp)) gleich einem vorbestimmbaren Aufweckzeitwert (twake(el)) ist, ein Aufweck-Flag gesetzt, der Absolutzeitwert (t(abs)) erhöht und der Umschaltzeitwert (t(sft)) gleich gesetzt wird mit dem Absolutzeitwert (t(abs)) zuzüglich eines Maximumzeitwertes (twake(max)) und abzüglich eines Fülldauerzeitwertes (twake(el)), und

- Mitteln durch die, nachdem das Aufweck-Flag gesetzt und das Steuerelement gefüllt ist, der Absolutzeitwert (t(abs)) erhöht und mit einem Gleichlaufstartzeitwert (tr) verglichen wird und durch die dann, wenn der Absolutzeitwert (t(abs)) kleiner ist als der Gleichlaufstartzeitwert (tr), der Umschaltzeitwert (t(sft)) gleich gesetzt wird mit dem Absolutzeitwert (t(abs)) zuzüglich des Maximumzeitwertes (twake(max)) und abzüglich des Fülldauerzeitwertes (twake(el)), und dann, wenn der Absolutzeitwert (t(abs)) nicht kleiner ist als der Gleichlaufstartzeitwert (tr), der Umschaltzeitwert (t(sft)) gleich gesetzt wird mit dem Absolutzeitwert (t(abs)) zuzüglich des Maximumzeitwertes (twake(max)).

4. Steuersystem nach Anspruch 2 oder 3, gekennzeichnet durch

- Mittel zum Aktualisieren des einen Zeitreferenzwertes (tE(i)) durch einen nächsten Zeitreferenzwert (tE(i+1)), sofern der Umschaltzeitwert (t(sft)) nicht kleiner ist als der eine Zeitreferenzwert (tE(i)).

5. Steuersystem nach einem der Ansprüche 1 bis 4, gekennzeichnet durch

- einen Speicher zum Speichern eines sequenziellen Satzes von Drucksteigerungswerten (SE(i)), wobei jeder Drucksteigerungswert (SE(i)) einem der Zeitreferenzwerten (tE(i)) zugeordnet ist, und

- Mittel, durch die an das Steuerelement ein Druck anlegbar ist, der einem ausgewählten Druckführungswert (PE(i)) zuzüglich des Produkts aus einem ausgewählten Drucksteigerungswert (SE(i)) und einem Zeitintervallwert (t(sft)-tE(i)) entspricht.

6. Verfahren zur Steuerung des Unterdrucksetzens hydraulisch betätigbarer Steuerelemente eines Fahrzeuglastschaltgetriebes mit folgenden Verfahrensschritten:

a) es wird ein sequentieller Satz von Zeitreferenzwerten (tE(i)) und ein sequenzieller Satz von Druckführungsgrößen (PE(i)) gespeichert, wobei jeder Druckführungswert (PE(i)) einem der Zeitreferenzwerten (tE(i))zugeordnet ist,

b) vor dem Anlegen eines Fülldruckimpulses an das Steuerelement wird periodisch ein Absolutzeitwert (t(abs)) erhöht und ein Umschaltzeitwert (t(sft)) mit dem Absolutzeitwert (t(abs)) gleich gesetzt,

c) als Antwort auf einen Aufweckbefehl werden periodisch ein Basisimpulszeitwert (t(bp)) und ein Absolutzeitwert (t(abs)) erhöht und die Erhöhung eines Umschaltzeitwertes (t(sft)) verhindert,

d) wenn der Basisimpulszeitwert (t(bp)) gleich einem vorbestimmbaren Aufweckzeitwert (twake(el)) ist, werden ein Aufweck-Flag gesetzt, der Absolutzeitwert (t(abs)) erhöht und der Umschaltzeitwert (t(sft)) gleich gesetzt mit dem Absolutzeitwert (t(abs)) zuzüglich eines Maximumzeitwertes (twake(max)) und abzüglich eines Fülldauerzeitwertes (twake(el)),

e) nachdem das Aufweck-Flag gesetzt und das Steuerelement gefüllt ist, wird der Absolutzeitwert (t(abs)) erhöht und mit einem Gleichlaufstartzeitwert (tr) verglichen und es wird dann, wenn der Absolutzeitwert (t (abs)) kleiner ist als der Gleichlaufstartzeitwert (tr), der Umschaltzeitwert (t(sft)) gleich gesetzt mit dem Absolutzeitwert (t(abs)) zuzüglich des Maximumzeitwertes (twake(max)) und abzüglich des Fülldauerzeitwertes (twake(el)), und dann, wenn die Absolutzeit (t(abs)) nicht kleiner ist als der Gleichlaufstartzeitwert (tr) der Umschaltzeitwert (t(sft)) gleich gesetzt wird mit dem Absolutzeitwert (t(abs)) zuzüglich des Maximumzeitwertes (twake(max)),

f) nach jedem der Schritte b), c) und d) wird der Umschaltzeitwert (t(sft)) mit einem der Zeitreferenzwerte (tE (i+1)) verglichen und der zugehörige der gespeicherten Druckführungswerte aus dem Speicher ausgewählt, und es wird ein Druck an das Steuerelement angelegt, der dem ausgewählten Druckführungswerten entspricht.

**7.** Verfahren nach Anspruch 6, dadurch gekennzeichnet, daß der aktuelle Zeitreferenzwert (tE(i)) auf den nächsten sequentiellen Zeitreferenzwert (tE(i)) aktualisiert wird, sofern der Umschaltzeitwert (t(sft)) nicht kleiner ist als der erstgenannte Zeitreferenzwert (tE(i)).

**8.** Verfahren nach Anspruch 6 oder 7, dadurch gekennzeichnet,

- daß ein sequenzieller Satz von Drucksteigerungswerten (SE(i)) in einem Speicher abgelegt wird, wobei jeder Drucksteigerungswert (SE(i)) einem der Zeitreferenzwerten (tE(i)) zugeordnet ist, und

- daß ein Druck an das Steuerelement angelegt wird, der einem ausgewählten Druckführungswert (PE(i)) zuzüglich des Produktes aus dem Drucksteigerungswert (SE(i)) und einem Zeitintervallwert (t(sft) - tE(i)) entspricht.

**9.** Verfahren nach einem der Ansprüche 6 bis 8, dadurch gekennzeichnet, daß als Antwort auf einen Aufweckbefehl der Fülldruckimpuls an das Steuerelement angelegt wird, und daß während des Anliegens des Fülldruckimpulses periodisch ein Basisimpulszeitwert (t(bp)) und ein Absolutzeitwert (t(abs)) erhöht und die Erhöhung des Umschaltzeitwertes (t(sft)) verhindert werden.

## Claims

**1.** Control system for a vehicle power shift transmission having a plurality of hydraulic pressure-operated control elements by means of which, in order to shift the gear, the hydraulic pressure supplied to the elements is controlled, with means for applying to each oncoming element a fill pressure pulse for fill periods (twake(el)), which are unique for each element,
characterised by

- means for determining shift time values (t(sft)) subsequent to filling of the control elements as a function of the fill period (twake(el)),

- means for applying pressure signals to the control elements at times represented by the shift time values (t (sft)), the shift time values (t(sft)) being unique for each control element,

- means for determining, subsequent to a synchronous start time (tr), synchronous time values which are identical for all the control elements, and

- means by which, subsequent to the synchronous start time (tr), pressure signals are applied to the control elements at times which are determined as a function of the synchronous time values.

**2.** Control system according to claim 1, characterised by

- a memory for storing a sequential set of time reference values (tE(i)) and a sequential set of pressure command values (PE (i)), each pressure command value (PE (i)) being allocated to one of the time reference values (tE (i)),

- means of comparing the shift time values (t(sft)) with one of the stored time reference values (tE(i+1)) and for selecting one of the stored pressure command values (PE(i)) in dependence of the result of said comparison, and

- means for applying pressure signals depending on the selected pressure command values (PE(i)) to the control elements.

**3.** Control system according to claim 2, characterised in that there is provided a microprocessor-based system for controlling pressurisation of the control elements, by means of which, in order to shift the gear system, the hydraulic pressure delivered to the elements is controlled, with

- means by which, prior to application of a fill pressure pulse to a control element, an absolute time value (t (abs)) is increased and shift time value (t(sft)) is equated to the absolute time value (t(abs)),

- means by which, in dependence on a wake-up command, a base pulse time value (t(bp)) and an absolute time value (t(abs)) are periodically increased, and an increase in the shift time value (t(sft)) is prevented,

- means by which then, when the base pulse time value (t(bp)) is equal to a predeterminable wake-up time value (twake(el)), a wake-up flag is set, the absolute time value (t(abs)) is increased and the shift time value (t(sft)) is set equal to the absolute time value (t(abs)) plus a maximum time value (twake-(max)) and less the fill duration time value (twake-(el)), and

- means by which, after the wake-up flag has been set and the control element filled, the absolute time value (t(abs)) is increased and compared to a synchronous start time value (tr), and by means of which then, if the absolute time value (t(abs)) is smaller than the synchronous start time value (tr), the shift time value (t(sft)) is set equal to the absolute time value (t(abs)) plus the maximum time value (twake(max)) and less the fill duration time value (twake(el)), and, when the absolute time value (t(abs)) is not smaller than the synchronous start time value (tr), the shift time value (t(sft)) is set equal to the absolute time value (t(abs)) less the maximum time value (twake(max)).

**4.** Control system according to claim 2 or 3,
characterised by

- means of updating one time reference value (tE(i)) by the next time reference value (tE(i+1)), when the switch time value (t(sft)) is not smaller than the one time reference value (tE(i)).

**5.** Control system according to one of claims 1 to 4,
characterised by

- a memory for storing a sequential set of pressure slope values (SE(i)), each pressure slope value (SE(i)) being allocated to one of the time reference values (tE(i)), and

- means by which there may be applied to the control element a pressure which corresponds to a selected pressure command value (PE(i)) plus the product of a selected pressure slope value (SE(i)) and a time interval value (t(sft) -tE(i)).

**6.** Method of controlling pressurisation of hydraulically operated control elements of a vehicle power shift transmission with the following method steps:

a) a sequential set of time reference values (tE(i)) in the sequential set of pressure command values (PE(i)) are stored, each pressure command value (PE(i)) having allocated to it one of the time reference values (tE(i)),

b) prior to application of a fill pressure pulse to the control element, an absolute time value (t(abs)) is periodically increased and a shift time value (t(sft)) set equal to the absolute time value (t(abs)),

c) in response to a wake-up command, a basic pulse time value (t(bp)) and an absolute time value (t(abs)) are periodically increased and prevents the increase of a shift time value (t(sft)),

d) when the base pulse time value (t(bp)) is equal to a predeterminable wake-up time value (twake(el)), a wake-up flag is set, the absolute time value (t(abs)) is increased and the shift time value (t(sft)) is set equal to the absolute time value (t(abs)) plus a maximum time value (twake(max)) and less a fill duration time value (twake (el)),

e) after the wake-up flag is set and the control element is filled, the absolute time value (t(abs)) is increased and compared to a synchronous start time value (tr) and then, if the absolute time value (t(abs)) is smaller than the synchronous start time value (tr) the shift time value (t(sft)) is set equal to the absolute time value (t (abs)) plus the maximum time value (twake(max)) and less the fill duration time value (twake(el)), and if the absolute time (t(abs)) is not smaller than the synchronous start time value (tr) the shift time value (t(sft)) is set equal to the absolute time value (t(abs)) plus the maximum time value (twake(max)),

f) after each of the steps b), c) and d,) the shift time value (t(sft)) is compared to one of the time reference values (tE(i+1)) and the associated one of the stored pressure command values is selected from the memory, and a pressure is applied to the control element which corresponds with the selected pressure command values.

**7.** Method according to claim 6, characterised in that the present time reference value (tE(I)) is updated to the next sequential time reference value (tE(i)), when the shift time value (t(sft)) is not smaller than the first-named time reference value (tE(i)).

**8.** Method according to claim 6 or 7, characterized in that

- a sequential set of pressure slope values (SE(i)) is deposited in a memory, each pressure slope value (SE(i)) being allocated to one of the time reference values (tE(i)), and

- in that a pressure is applied to the control element which corresponds to a selected pressure command value (PE(i)) plus the product of the pressure slope value (SE(i)) and a time interval value (t(sft) - tE(i)).

**9.** Method according to one of claims 6 to 8,
characterised in that, in response to a wake-up command, the fill pressure pulse is applied to the control element, and in that during application of the fill pressure pulse, a base pulse time value (t(bp)) and an absolute time value (t(abs)) are periodically increased and increase in the shift time value (t(sft)) is prevented.

**Revendications**

**1.** Système de commande pour une boîte de vitesses commandée en charge de véhicule comportant plusieurs éléments de commande actionnés hydrauliquement, au moyen desquels la pression hydraulique délivrée aux éléments est commandée pour la commutation de la boîte de vitesses, comportant des moyens pour appliquer une impulsion de pression de remplissage à chaque élément devenant actif pendant des périodes de remplissage (twake(el)), qui sont prévues individuellement pour chaque élément, caractérisé par

- des moyens pour déterminer des valeurs de temps de commutation (t(sft)) intervenant à la suite du remplissage des éléments de commande en fonction de la période de remplissage (twake(e1)),
- des moyens pour appliquer des signaux de pression aux éléments de commande à des instants, qui sont représentés par les valeurs de temps de commutation (t(sft)), les valeurs de temps de commutation (t(sft) étant prévues individuellement pour chaque élément de commande,
- des moyens, à l'aide desquels sont déterminées, après un instant de démarrage synchrone (tr), des valeurs de temps de synchronisme, qui sont identiques pour tous les éléments de commande, et
- des moyens, à l'aide desquels, après l'instant (tr) de démarrage du synchrisme des signaux de pression sont appliqués aux éléments de commande à des instants qui sont déterminés en fonction des valeurs de temps de synchronisme.

**2.** Système de commande selon la revendication 1, caractérisé par

- une mémoire servant à mémoriser un ensemble séquentiel de valeurs de référence de temps (tE(i)) et un ensemble séquentiel de valeurs pilotes de pression (PE(i)), chaque valeur pilotes de pression (PE(i)) étant associée à l'une des valeurs de référence de temps (tE(i)),
- des moyens pour comparer les valeurs de temps de commutation (t(sft)) à l'une des valeurs de référence de temps mémorisées (tE(i+1)) et pour sélectionner l'une des valeurs pilotes de pression mémorisées (PE(i)) en fonction du résultat de la comparaison, et
- des moyens pour appliquer des signaux de pression, qui dépendent des valeurs pilotes de pression sélectionnées (PE(i)), aux éléments de commande.

**3.** Système de commande selon la revendication 2, caractérisé en ce qu'il est prévu un système assisté par micro-ordinateur pour commander la charge en pression des éléments de commande et qui commande la pression hydraulique délivrée aux éléments pour la commutation de la boîte de vitesses, comportant

- des moyens, à l'aide desquels une valeur de temps absolue (t(abs)) est accrue périodiquement avant l'application d'une impulsion de pression de remplissage à un élément de commande et à l'aide desquels une valeur de temps de commutation (t(sft)) est réglée égale à la valeur de temps absolue (t(abs)),
- des moyens, à l'aide desquels une valeur de temps d'impulsion de base (t(bp)) et une valeur de temps absolue (t(abs)) sont accrues périodiquement en fonction d'une instruction de réveil et à l'aide desquels l'augmentation de la valeur de temps de commutation (t(sft)) est empêchée,
- des moyens, à l'aide desquels, lorsque la valeur de temps de l'impulsion de base (t(bp)) est égale à une valeur de temps de réveil pouvant être déterminée (twake(el)), un drapeau de réveil est positionné, drapeau qui augmente la valeur de temps absolue (t(abs)), et à l'aide desquels la valeur de temps de commutation (t(fst)) est réglée égale à la valeur de temps absolue (t(abs)) plus une valeur de temps maximale (twake(max)) moins une valeur de temps de durée de remplissage, (twake(e1)), et
- des moyens, à l'aide desquels, une fois que le drapeau de réveil est positionné et que l'élément de commande est rempli, la valeur de temps absolue (t(abs)) est accrue et est comparée à un instant (tr) de démarrage de synchrisme, et à l'aide desquels lorsque la valeur de temps absolue (t(abs)) est inférieure à l'instant (tr) de démarrage du synchrisme, la valeur de temps de commutation (t(sft)) est réglée égale à la valeur de temps absolue (t(abs)) plus la valeur de temps maximale (twake(max)) et moins la valeur de temps de durée de remplissage (twake(e1)), et ensuite lorsque la valeur de temps absolue (t(abs)) n'est pas inférieure à l'instant (tr) de démarrage du synchrisme, la valeur de temps de commutation (t(sft)) est réglée égale à la valeur de temps absolue (t(abs) moins la valeur de temps maximale (twake(max)).

**4.** Système de commande selon la revendication 2 ou 3, caractérisé par

- des moyens pour actualiser une valeur de référence de temps (tE(i)) au moyen d'une valeur de référence de temps suivante (tE(i+1)) dans la mesure où la valeur de temps de commutation (t(sft)) n'est pas inférieure à cette valeur de référence de temps (tE(i).

**5.** Système de commande selon l'une des revendications 1 à 4, caractérisé par

- une mémoire pour mémoriser un ensemble séquentiel de valeurs d'augmentation de pression (SE(i)), chaque valeur d'augmentation de pression (SE(i)) étant associée à l'une des valeurs de référence de temps (tE(i)), et
- des moyens à l'aide desquels peut être appliquée à l'élément de commande une pression qui correspond à une valeur pilote de pression sélectionnée (PE(i)) plus le produit d'une valeur sélectionnée d'augmentation de pression (SE(i)) et d'une valeur d'intervalle de temps (t(sft))-tE(i)).

**6.** Procédé pour commander la mise sous pression d'éléments de commande actionnés hydrauliquement d'une boîte de vitesses commandée en charge d'un véhicule, comprenant les étapes opératoires suivantes :

a) un ensemble séquentiel de valeurs de référence de temps (tE(i) et un ensemble séquentiel de grandeurs pilotes de pression (PE(i)) sont mémorisés, chaque valeur pilote de pression (PE(i)) étant associée à l'une des valeurs de référence de temps (tE(i)),
b) avant l'application d'une impulsion de pression de remplissage à l'élément de commande, une valeur de temps absolue (t(abs)) est accrue périodiquement et une valeur de temps de commutation (t(sft)) est réglée égale à la valeur de temps absolue (t(abs)),
c) en tant que réponse à une instruction de réveil, une valeur de temps d'impulsion de base (t(bp)) et une valeur de temps absolue (t(abs)) sont accrues périodiquement et l'augmentation d'une valeur de temps de commutation (t(sft)) est empêchée,
d) lorsque la valeur de temps d'impulsion de base (t(bp)) est égale à une valeur de temps de réveil pouvant être prédéterminée (twake(e1)), un drapeau de réveil est positionné, la valeur de temps absolue (t(abs)) est accrue et la valeur de temps de commutation (t(sft)) est réglée égale à la valeur de temps absolue (t(abs)) plus une valeur de temps maximale (twake(max)) et moins une valeur de temps de durée de remplissage (twake(e1)),
e) une fois que le drapeau de réveil a été positionné et que l'élément de commande est rempli, la valeur de temps absolue (t(abs)) est accrue et est comparée à un instant (tr) de démarrage du synchrisme, puis lorsque la valeur de temps absolue (t(abs)) est inférieure à l'instant (tr) de démarrage du synchrisme, la valeur de temps de commutation (t(sft)) est réglée égale à la valeur de temps absolue (t(abs)) plus la valeur de temps maximale (twake(max)) et moins la valeur de temps de durée de remplissage (twake(e1)), puis, lorsque la valeur de temps absolue (t(abs)) n'est pas inférieure à l'instant (tr) de démarrage dusynchrisme, la valeur de temps de commutation (t(sft)) est réglée égale à la valeur de temps absolue (t(abs)) plus la valeur de temps maximale (twake(max)),

f) après chacun des pas b), c) et d), la valeur de temps de commutation (t(sft)) est comparée à l'une des valeurs de référence de temps (tE(i+1) et la valeur associée parmi les valeurs pilotes de pression mémorisées est sélectionnée dans la mémoire, et une pression, qui correspond aux valeurs pilotes de pression sélectionnée, est appliquée à l'élément de commande.

**7.** Procédé selon la revendication 6, caractérisé en ce que la valeur actuelle de référence de temps (tE(i)) est actualisée sur la valeur de référence de temps successive suivante (tE(i)) dans la mesure où la valeur de temps de commutation (t(sft)) n'est pas inférieure à la valeur de référence de temps indiquée (tE(i)) indiquée en premier lieu.

**8.** Procédé selon la revendication 6 ou 7, caractérisé en ce

- qu'un ensemble séquentiel de valeurs d'augmentation de pression (SE(i)) est mémorisé dans une mémoire, chaque valeur d'accroissement de pression (SE(i)) étant associée à l'une des valeurs de référence de temps (tE(i)), et
- qu'à l'élément de commande est appliquée une pression qui correspond à la valeur pilote de pression sélectionnée (PE(i)) plus le produit de la valeur d'accroissement de pression (SE(i)) et d'une valeur d'intervalle de temps (t(sft)) - tE(i)).

**9.** Procédé selon l'une des revendications 6 à 8, caractérisé en ce qu'en tant que réponse à une instruction de réveil, l'impulsion de pression de remplissage est appliquée à l'élément de commande et que, pendant l'application de l'impulsion de pression de remplissage, une valeur de temps d'impulsion de base (t(bp)) et une valeur de temps absolue (t(abs) sont accrues périodiquement et que l'accroissement de la valeur de temps de commutation (t(sft)) est empêché.

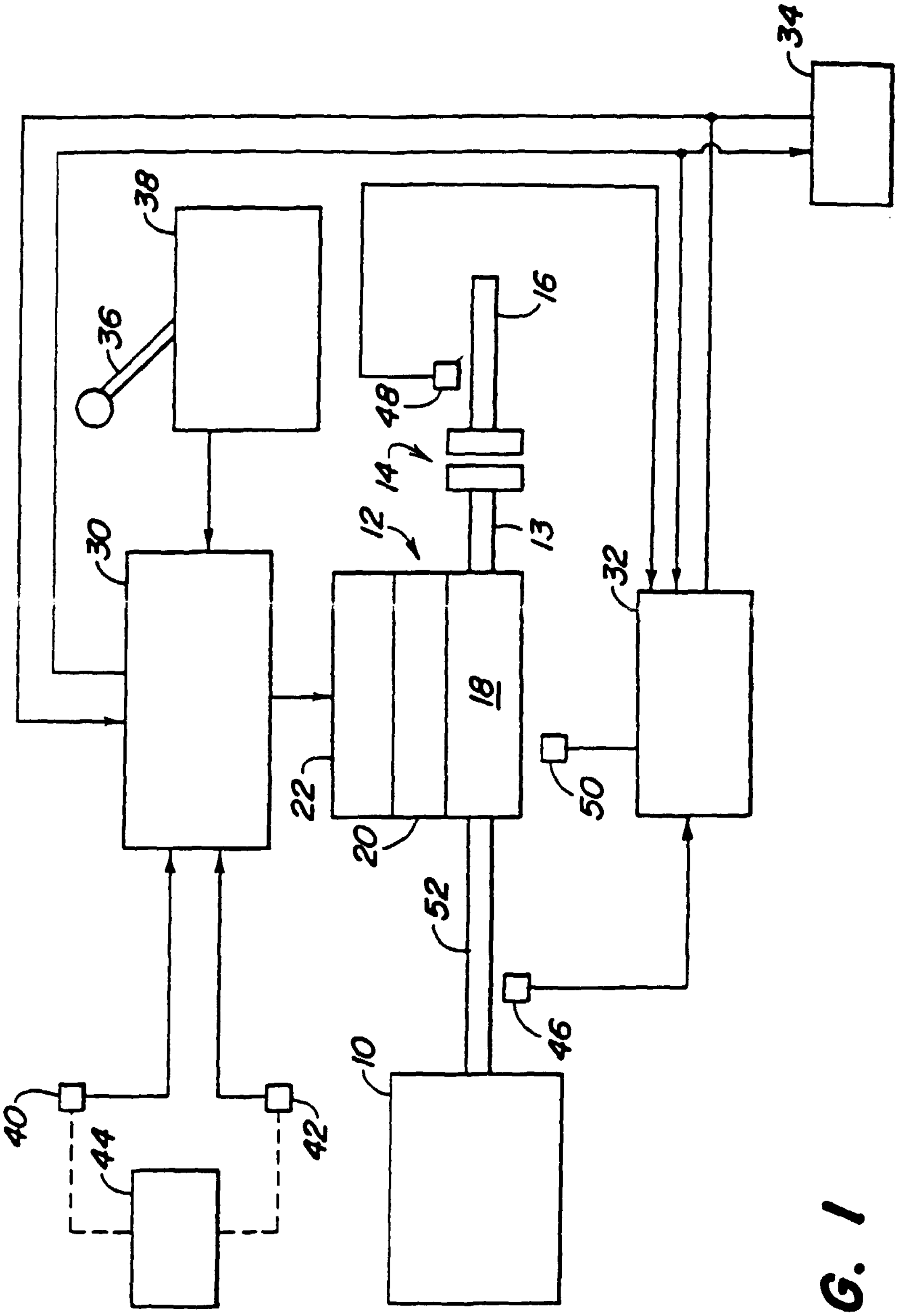


FIG. 1

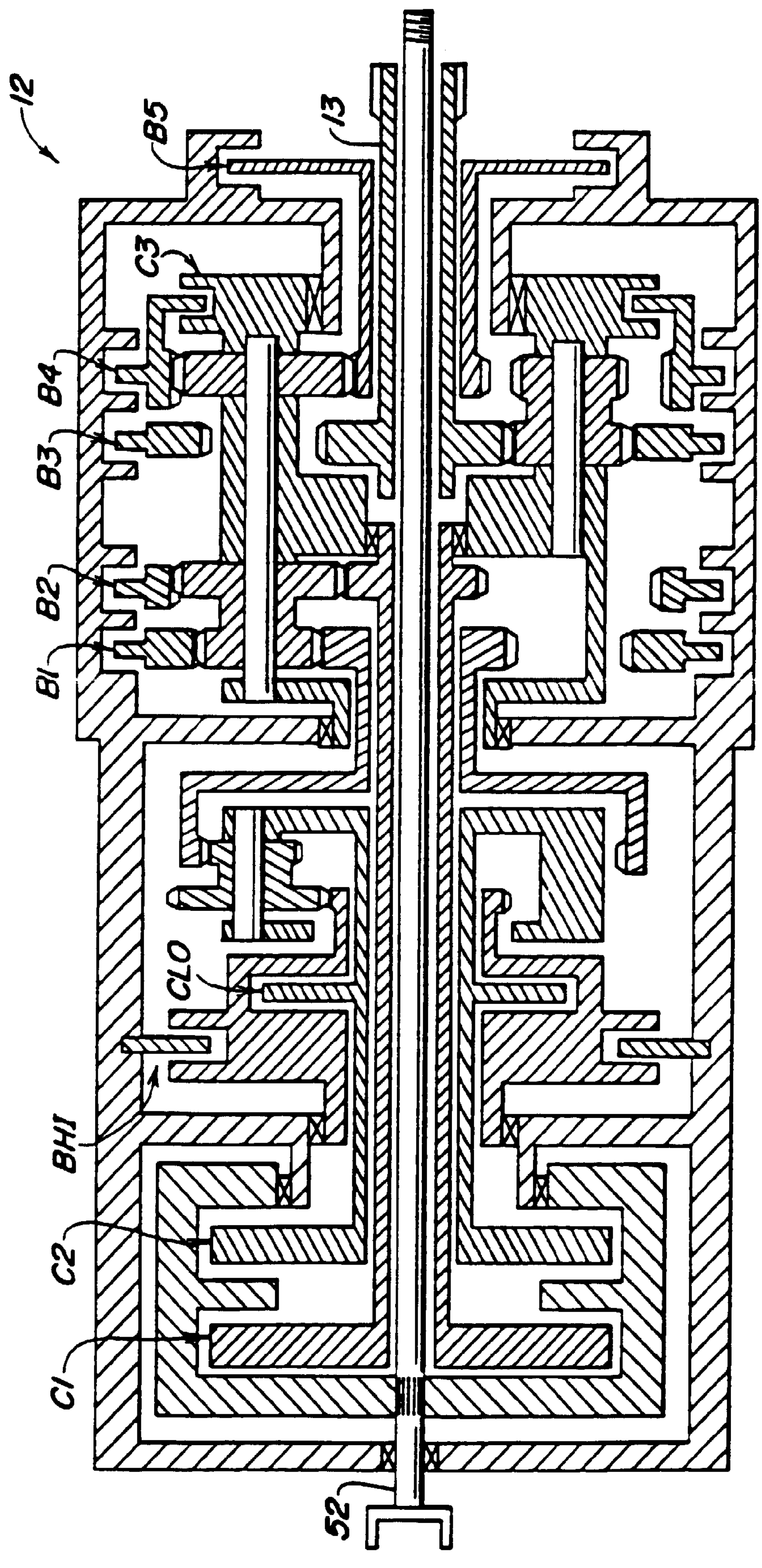


FIG. 2a

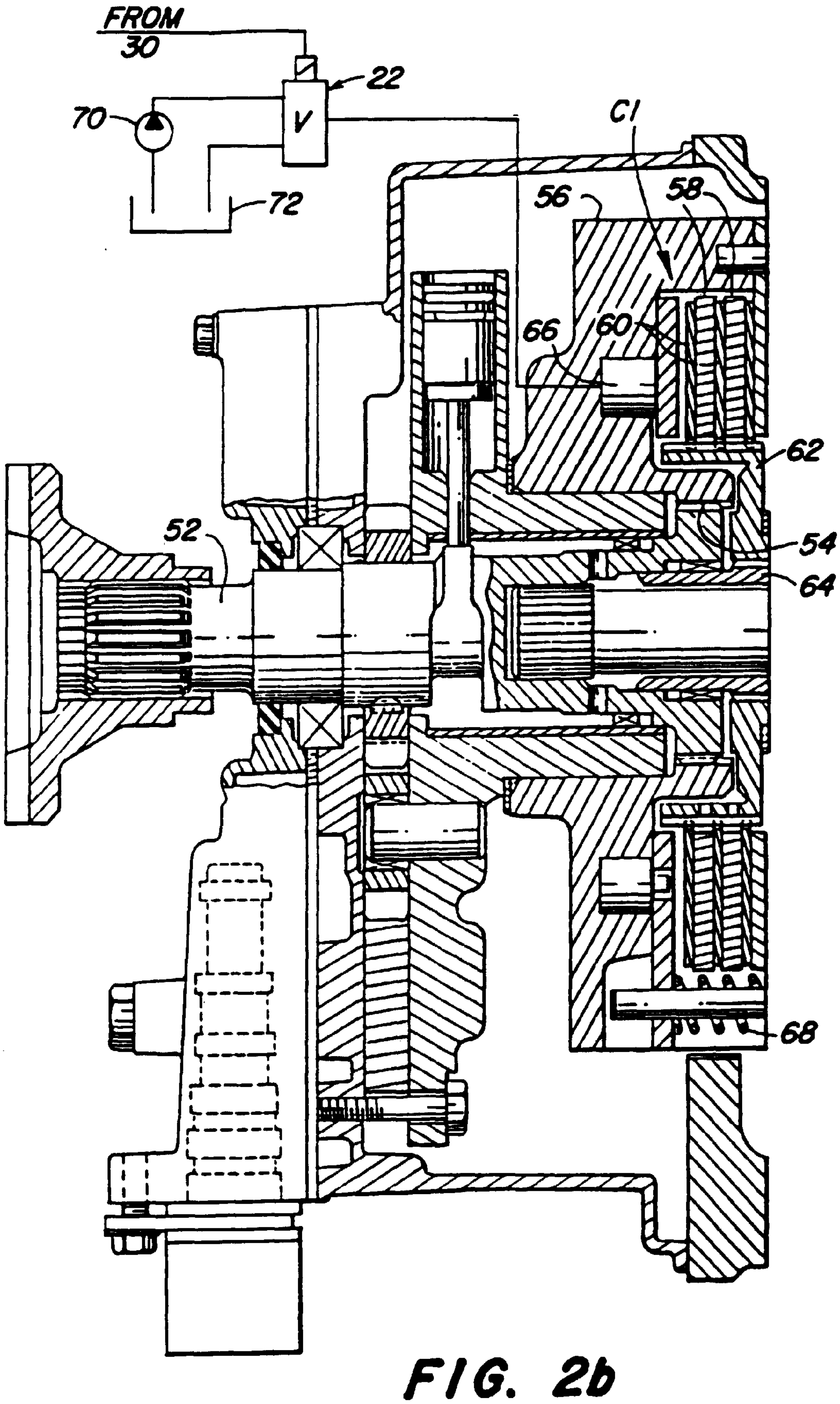


FIG. 2b

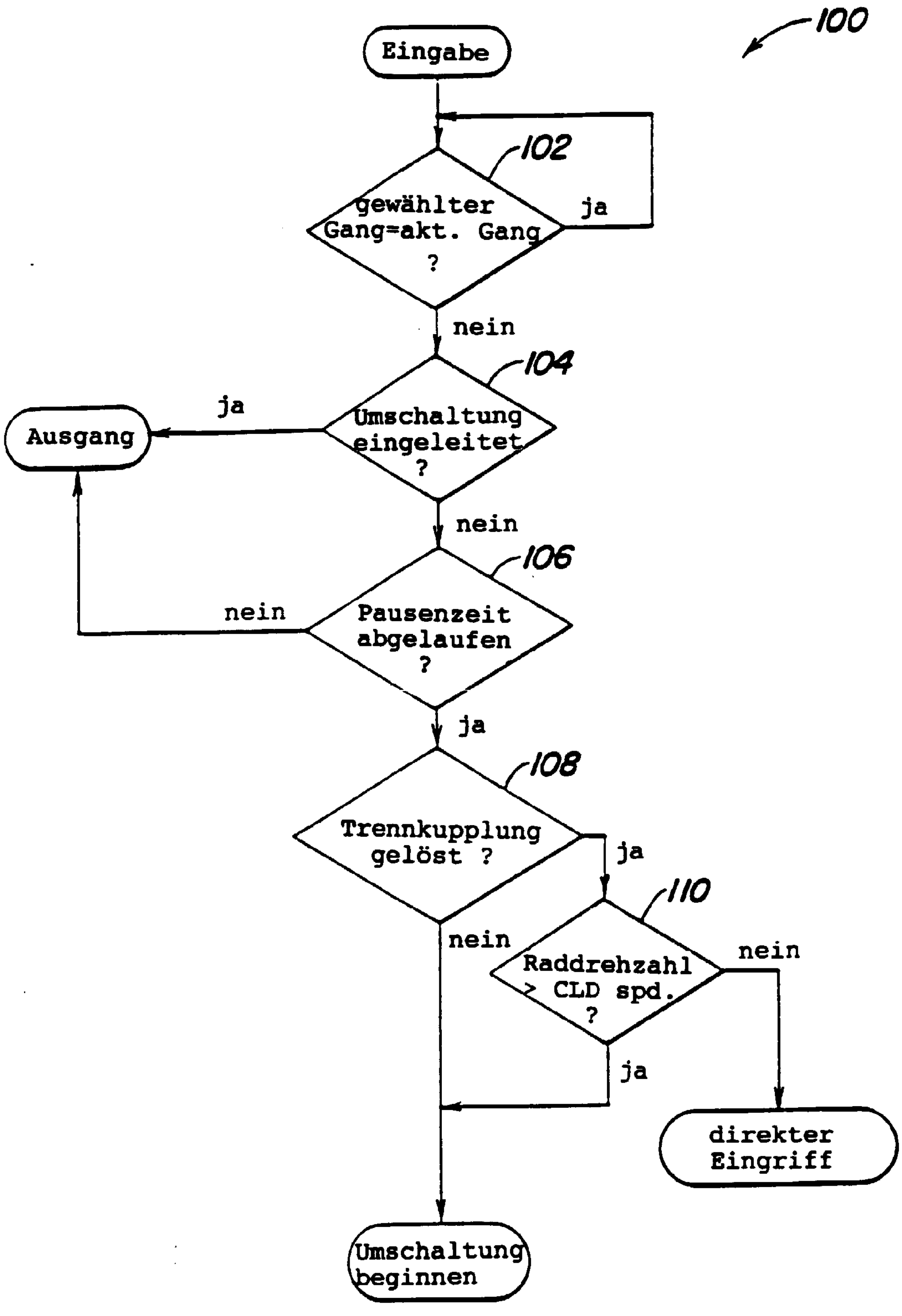
100
Eingabe
102
gewählter
Gang=akt. Gang
?
ja
nein
104
ja
Ausgang
Umschaltung
eingeleitet
?
nein
106
nein
Pausenzeit
abgelaufen
?
ja
108
Trennkupplung
gelöst ?
ja
110
nein
Raddrehzahl
> CLD spd.
?
nein
ja
direkter
Eingriff
Umschaltung
beginnen

FIG. 3

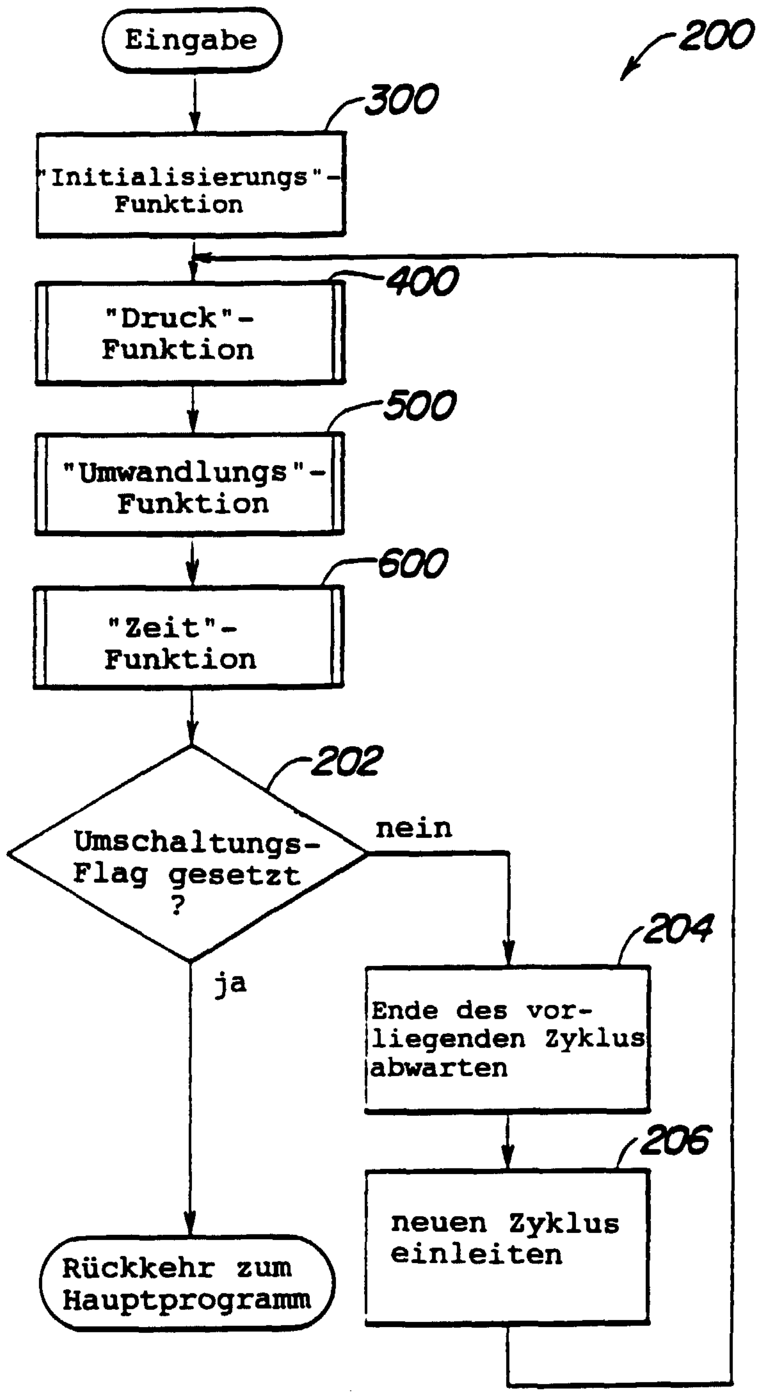
200
Eingabe
300
"Initialisierungs"-Funktion
400
"Druck"-Funktion
500
"Umwandlungs"-Funktion
600
"Zeit"-Funktion
202
Umschaltungs-Flag gesetzt ?
nein
ja
204
Ende des vorliegenden Zyklus abwarten
206
neuen Zyklus einleiten
Rückkehr zum Hauptprogramm

FIG. 4

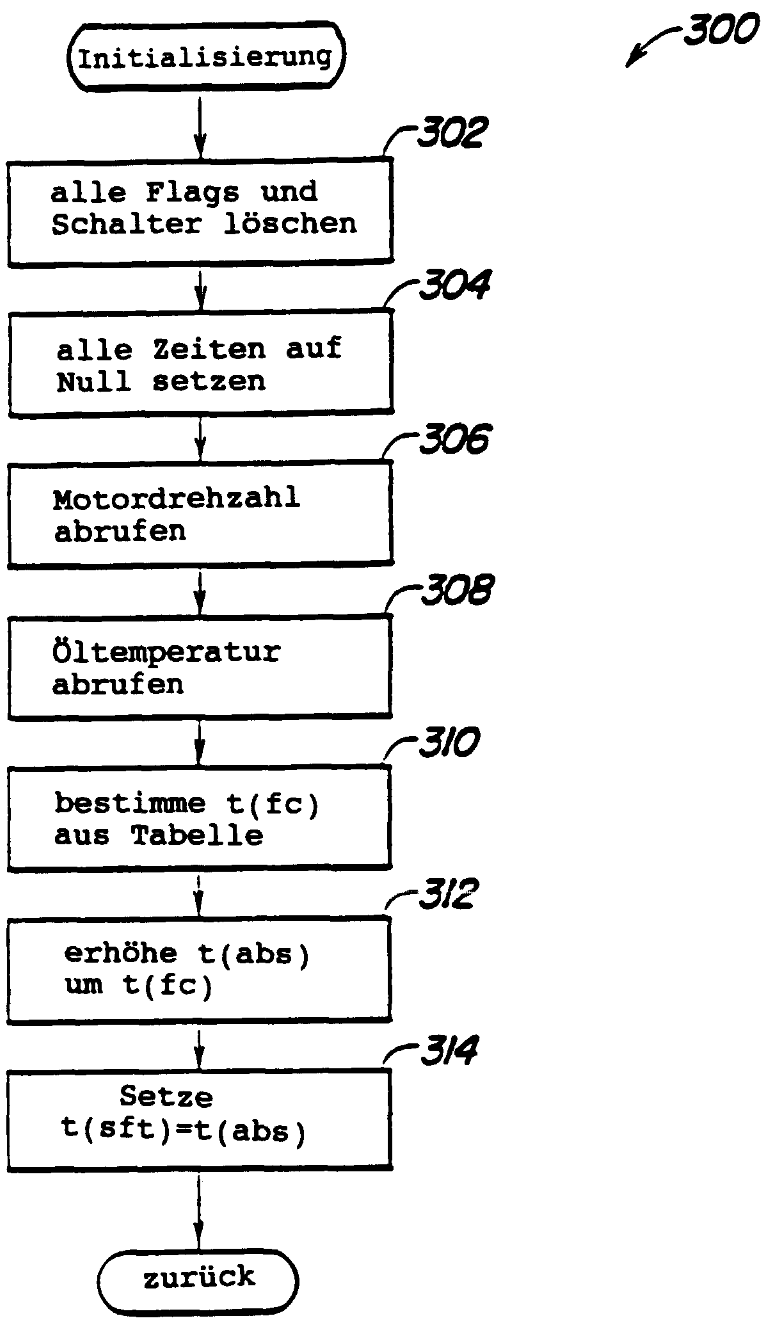
300
Initialisierung
302
alle Flags und Schalter löschen
304
alle Zeiten auf Null setzen
306
Motordrehzahl abrufen
308
Öltemperatur abrufen
310
bestimme t(fc) aus Tabelle
312
erhöhe t(abs) um t(fc)
314
Setze t(sft)=t(abs)
zurück

FIG. 5

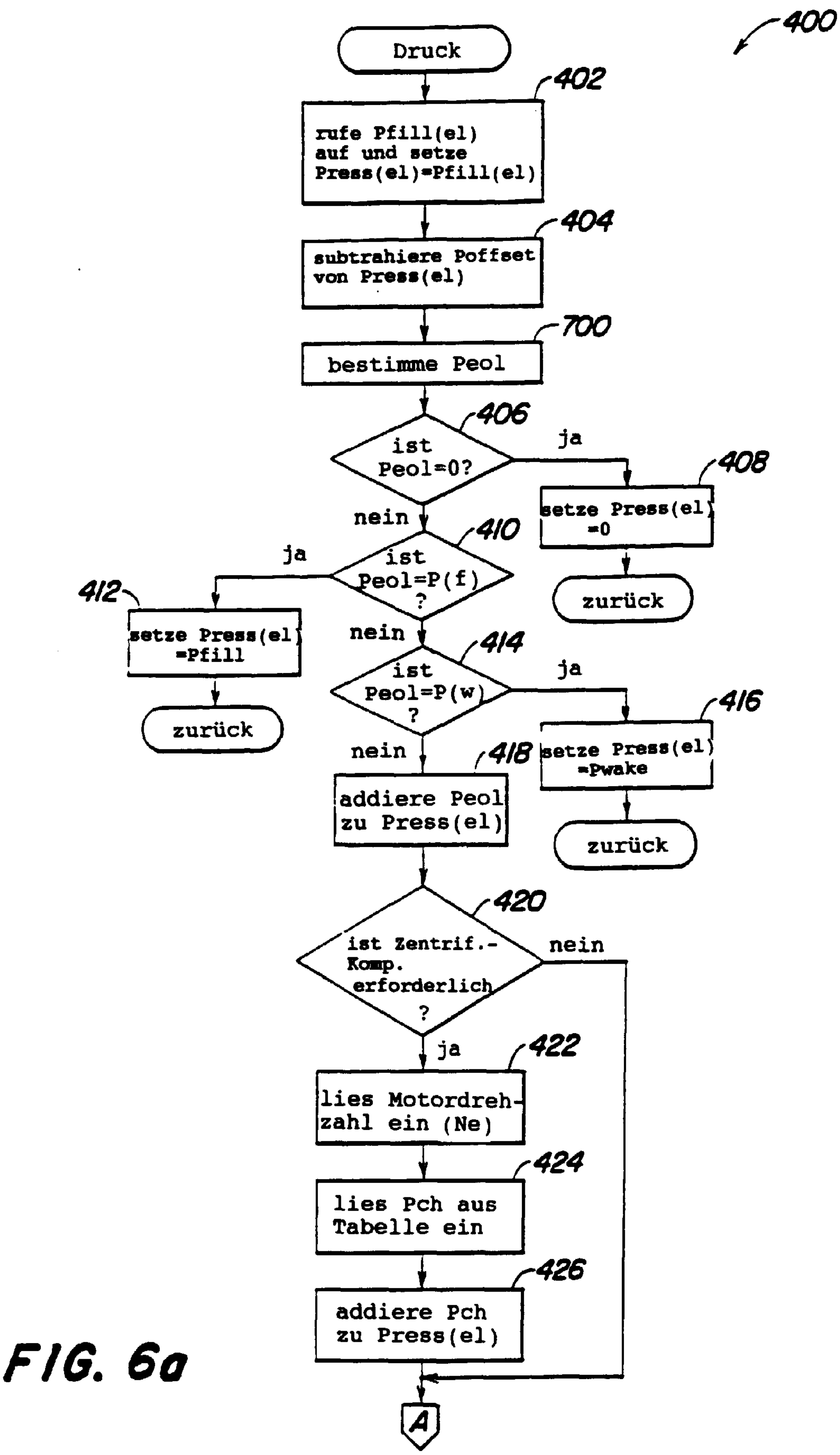
400
Druck
402
rufe Pfill(el) auf und setze Press(el)=Pfill(el)
404
subtrahiere Poffset von Press(el)
700
bestimme Peol
406
ist Peol=0?
ja
408
setze Press(el) =0
zurück
nein
410
ist Peol=P(f) ?
ja
412
setze Press(el) =Pfill
zurück
nein
414
ist Peol=P(w) ?
ja
416
setze Press(el) =Pwake
zurück
nein
418
addiere Peol zu Press(el)
420
ist Zentrif.-Komp. erforderlich ?
nein
ja
422
lies Motordrehzahl ein (Ne)
424
lies Pch aus Tabelle ein
426
addiere Pch zu Press(el)
A

FIG. 6a

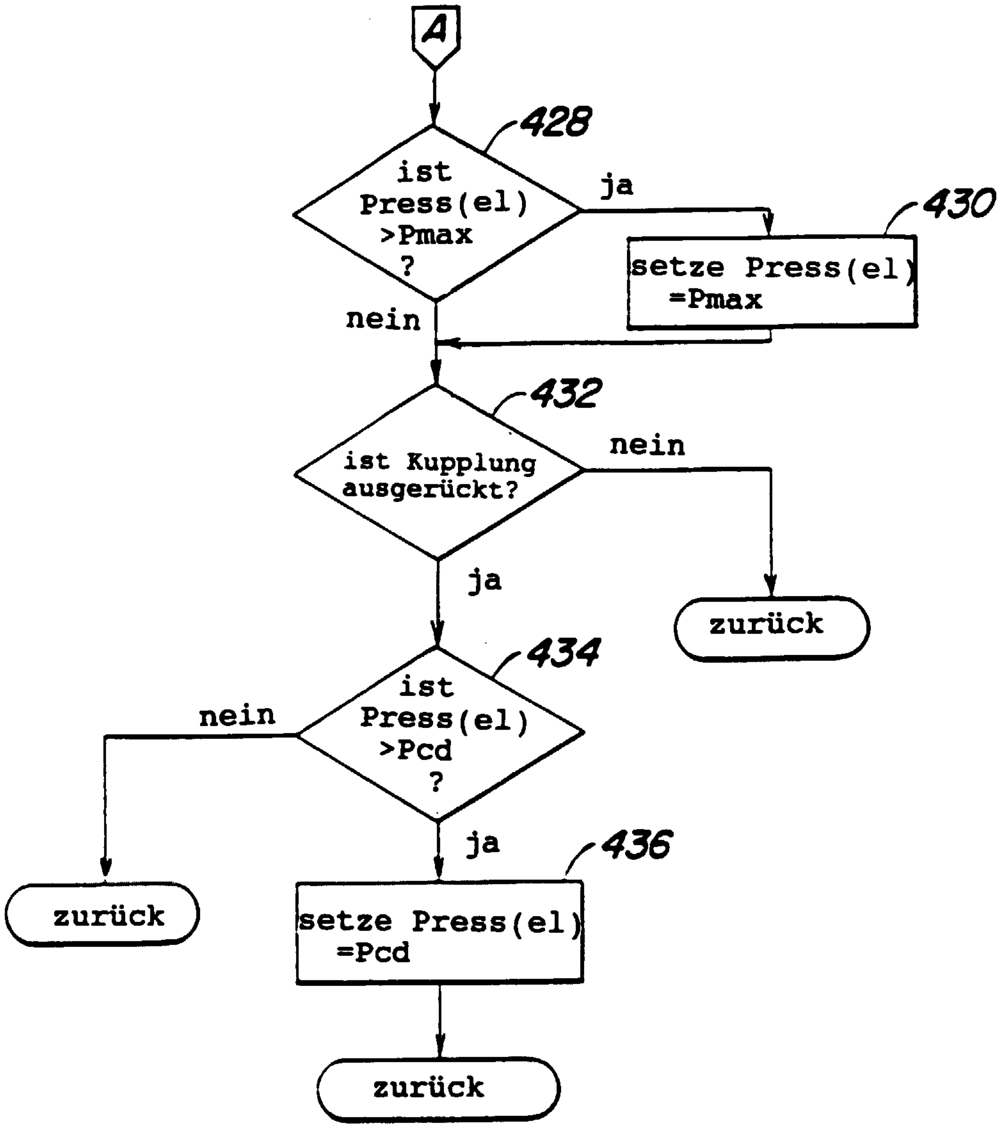
A
428
ist
Press(el)
>Pmax
?
ja
430
setze Press(el)
=Pmax
nein
432
ist Kupplung
ausgerückt?
nein
ja
zurück
434
ist
Press(el)
>Pcd
?
nein
ja
436
zurück
setze Press(el)
=Pcd
zurück

FIG. 6b

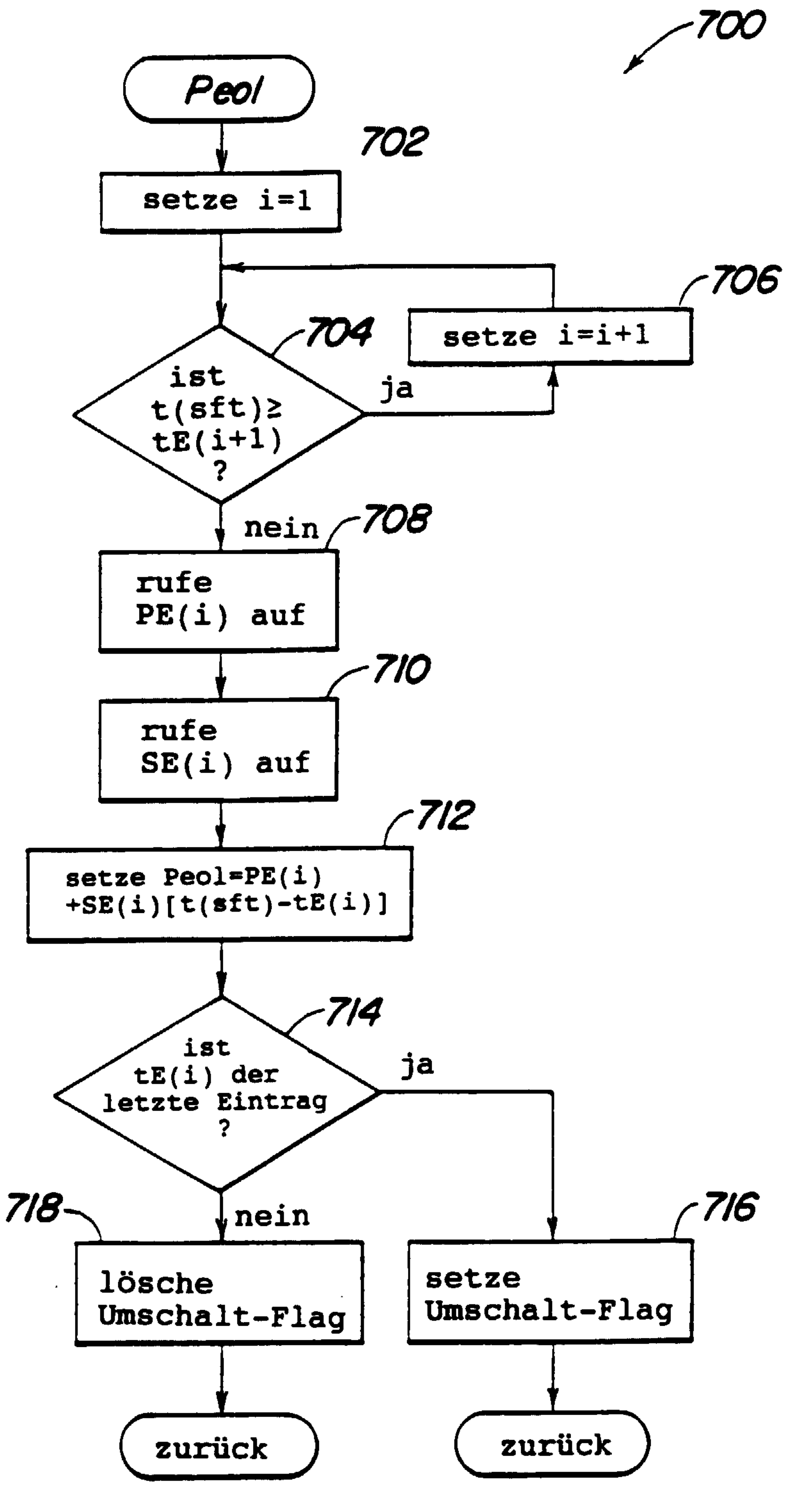
700
Peol
702
setze i=1
706
setze i=i+1
704
ist
t(sft)≥
tE(i+1)
?
ja
nein
708
rufe
PE(i) auf
710
rufe
SE(i) auf
712
setze Peol=PE(i)
+SE(i)[t(sft)-tE(i)]
714
ist
tE(i) der
letzte Eintrag
?
ja
718
nein
716
lösche
Umschalt-Flag
setze
Umschalt-Flag
zurück
zurück

FIG. 7

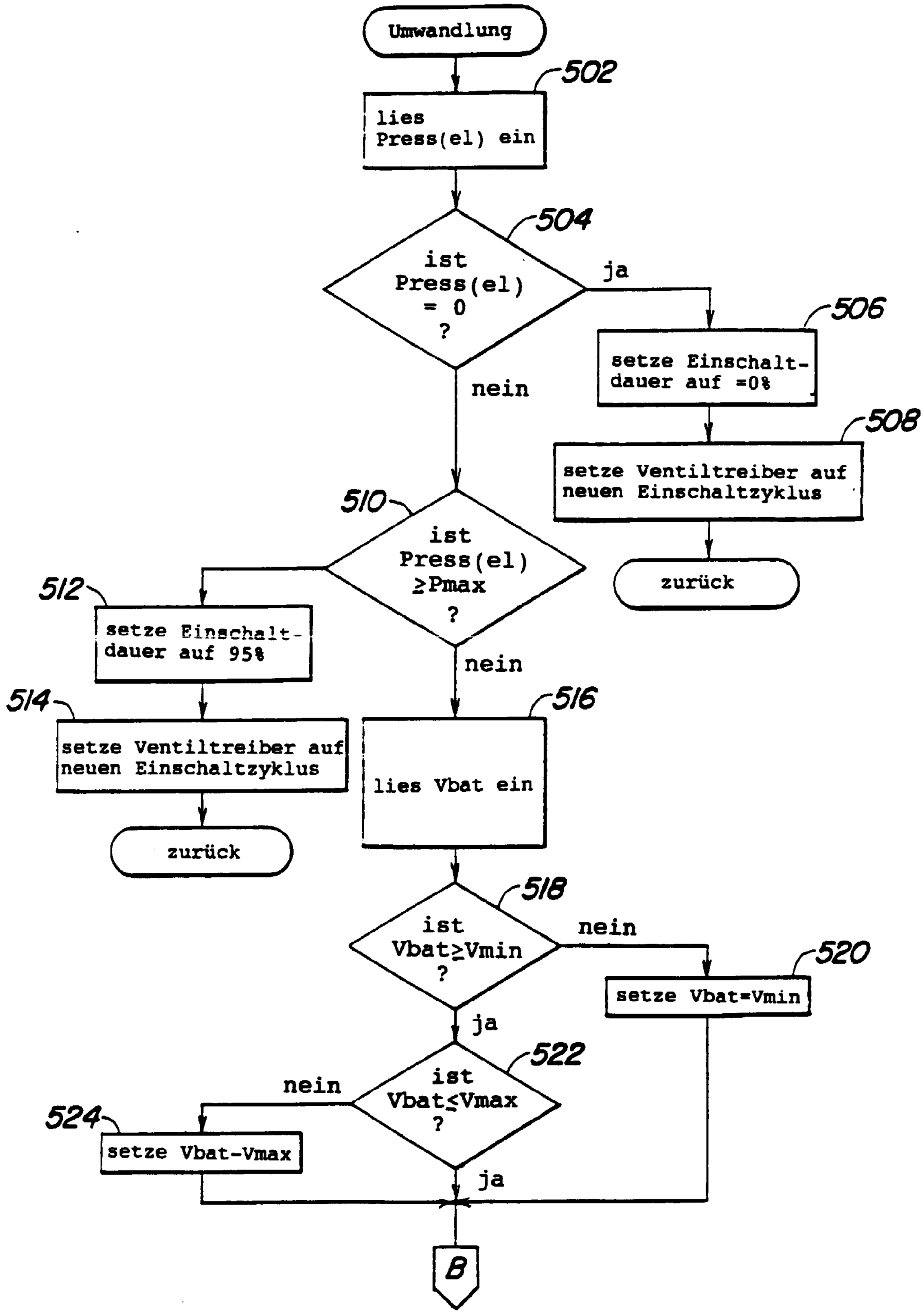
Umwandlung
502
lies Press(el) ein
504
ist Press(el) = 0 ?
ja
nein
506
setze Einschalt-dauer auf =0%
508
setze Ventiltreiber auf neuen Einschaltzyklus
zurück
510
ist Press(el) ≥Pmax ?
512
setze Einschalt-dauer auf 95%
514
setze Ventiltreiber auf neuen Einschaltzyklus
zurück
nein
516
lies Vbat ein
518
ist Vbat≥Vmin ?
nein
520
setze Vbat=Vmin
ja
522
ist Vbat≤Vmax ?
nein
524
setze Vbat-Vmax
ja
B

FIG. 8a

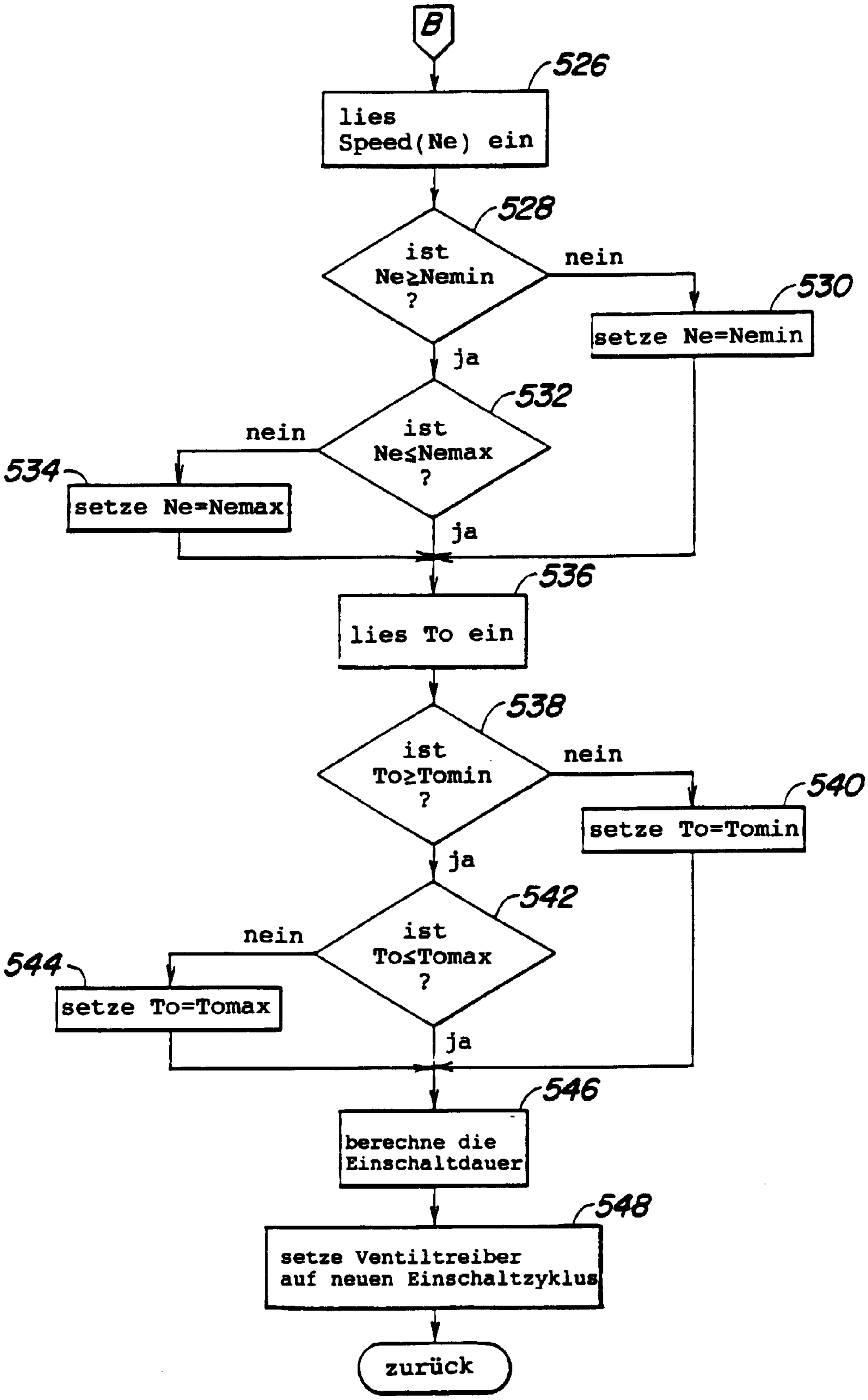
B
526
lies
Speed(Ne) ein
528
ist
Ne≥Nemin
?
nein
530
setze Ne=Nemin
ja
532
ist
Ne≤Nemax
?
nein
534
setze Ne=Nemax
ja
536
lies To ein
538
ist
To≥Tomin
?
nein
540
setze To=Tomin
ja
542
ist
To≤Tomax
?
nein
544
setze To=Tomax
ja
546
berechne die
Einschaltdauer
548
setze Ventiltreiber
auf neuen Einschaltzyklus
zurück

FIG. 8b

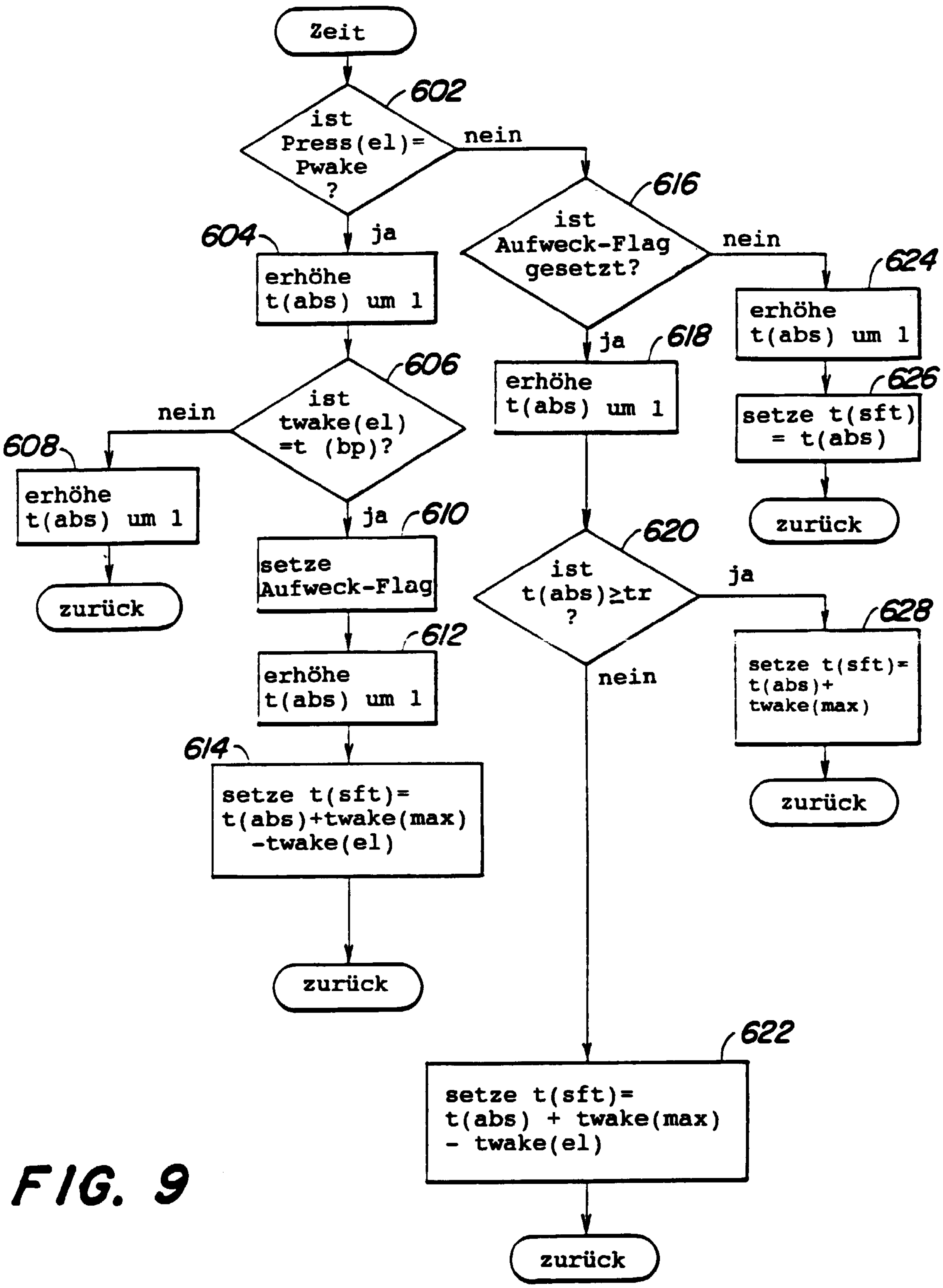
Zeit
602
ist Press(el)= Pwake ?
nein
ja
604
erhöhe t(abs) um 1
606
ist twake(el) =t (bp)?
nein
608
erhöhe t(abs) um 1
zurück
ja
610
setze Aufweck-Flag
612
erhöhe t(abs) um 1
614
setze t(sft)= t(abs)+twake(max) -twake(el)
zurück
616
ist Aufweck-Flag gesetzt?
nein
ja
618
erhöhe t(abs) um 1
624
erhöhe t(abs) um 1
626
setze t(sft) = t(abs)
zurück
620
ist t(abs)≥tr ?
ja
628
setze t(sft)= t(abs)+ twake(max)
zurück
nein
622
setze t(sft)= t(abs) + twake(max) - twake(el)
zurück

FIG. 9

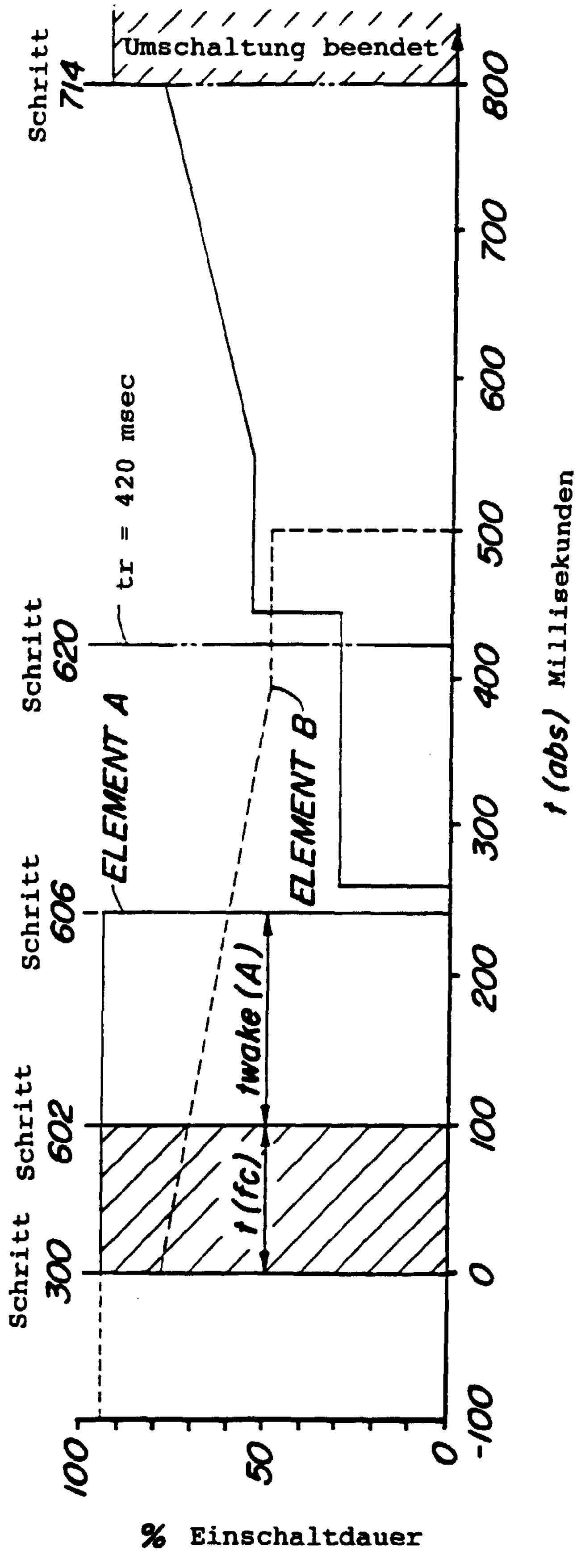
Schritt 300
Schritt 602
Schritt 606
Schritt 620
Schritt 714
Umschaltung beendet
tr = 420 msec
ELEMENT A
ELEMENT B
twake (A)
t (fc)
-100
0
100
200
300
400
500
600
700
800
t (abs) Millisekunden
100
50
0
% Einschaltdauer

FIG. 10

FIG. 11

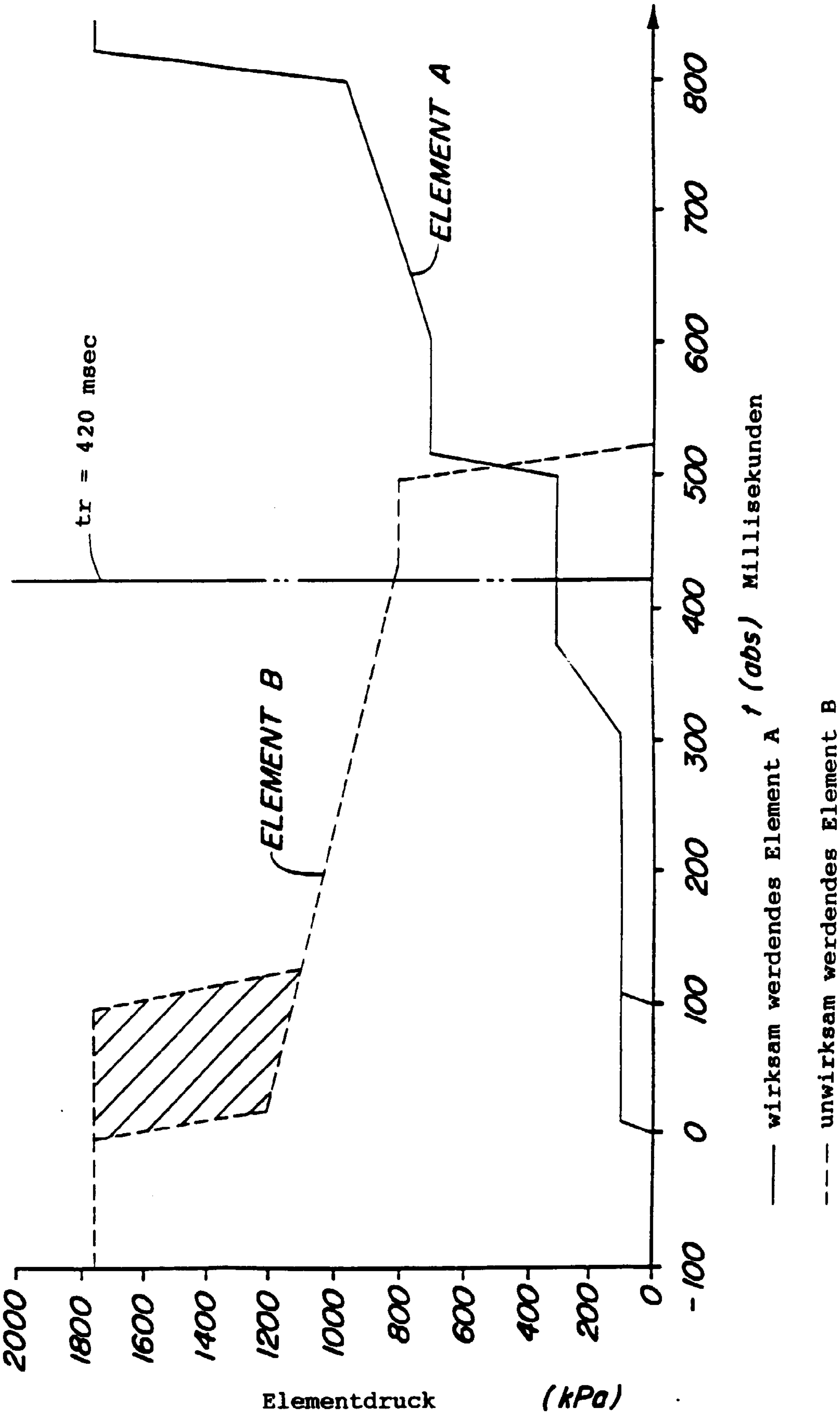
tr = 420 msec
ELEMENT A
ELEMENT B
2000
1800
1600
1400
1200
1000
800
600
400
200
0
-100
0
100
200
300
400
500
600
700
800
Elementdruck (kPa)
t (abs) Millisekunden
—— wirksam werdendes Element A
- - - unwirksam werdendes Element B